(19) **Europäisches Patentamt / European Patent Office / Office européen des brevets**

(11) **EP 4 319 099 B1**

(12) **EUROPEAN PATENT SPECIFICATION**

(45) Date of publication and mention
of the grant of the patent:
**15.04.2026 Bulletin 2026/16**

(21) Application number: **22877807.2**

(22) Date of filing: **18.08.2022**

(51) International Patent Classification (IPC):
**G10L 19/005** (2013.01)   **G10L 25/30** (2013.01)

(52) Cooperative Patent Classification (CPC):
**G10L 19/005; G10L 25/30**

(86) International application number:
**PCT/CN2022/113277**

(87) International publication number:
**WO 2023/056783 (13.04.2023 Gazette 2023/15)**

(54) **AUDIO PROCESSING METHOD, RELATED DEVICE, STORAGE MEDIUM AND PROGRAM PRODUCT**

AUDIOVERARBEITUNGSVERFAHREN, ZUGEHÖRIGE VORRICHTUNG, SPEICHERMEDIUM UND PROGRAMMPRODUKT

PROCÉDÉ DE TRAITEMENT AUDIO, DISPOSITIF ASSOCIÉ, SUPPORT DE STOCKAGE ET PRODUIT-PROGRAMME

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR

(30) Priority: **09.10.2021 CN 202111176990**

(43) Date of publication of application:
**07.02.2024 Bulletin 2024/06**

(73) Proprietor: **Tencent Technology (Shenzhen)
Company Limited
Shenzhen, Guangdong, 518057 (CN)**

(72) Inventors:
• **XIONG, Wei**
  **Shenzhen, Guangdong 518057 (CN)**
• **HUANG, Fei**
  **Shenzhen, Guangdong 518057 (CN)**

(74) Representative: **Nederlandsch Octrooibureau
P.O. Box 29720
2502 LS The Hague (NL)**

(56) References cited:
CN-A- 101 437 009    CN-A- 103 854 649
CN-A- 111 653 285    CN-A- 112 820 315
CN-A- 113 035 207    CN-A- 113 096 685
CN-A- 113 612 808    US-A1- 2006 193 671

• MARAFIOTI ANDRES ET AL: "A Context Encoder For Audio Inpainting", ARXIV:1806.04885V2,, vol. 27, no. 12, 1 December 2019 (2019-12-01), pages 2362 - 2372, XP011758594, DOI: 10.1109/ TASLP.2019.2947232
• LEE SUN-KYUNG: "Deep Generative Music Inpainting with Mel-Spectrogram", DOCTORAL DISSERTATION, PH. D. THESIS, KAIST, 1 January 2020 (2020-01-01), Daejeon, South Korea, pages 1 - 3, XP093189929, Retrieved from the Internet <URL:https://mac.kaist.ac.kr/~juhan/gct634/ 2020-Fall/Finals/Deep_Generative_Music_Inpain ting_with_Mel_Spectrogram.pdf>
• KIM HYUNG YONG ET AL: "A Multi-Resolution Approach to GAN-Based Speech Enhancement", APPLIED SCIENCES, vol. 11, no. 2, 13 January 2021 (2021-01-13), pages 721, XP093189942, ISSN: 2076-3417, DOI: 10.3390/app11020721
• YAMAMOTO RYUICHI ET AL: "Parallel Wavegan: A Fast Waveform Generation Model Based on Generative Adversarial Networks with Multi-Resolution Spectrogram", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 6199 - 6203, XP033793447, DOI: 10.1109/ICASSP40776.2020.9053795

- **RADFORD ALEC ET AL: "UNSUPERVISED REPRESENTATION LEARNING WITH DEEP CONVOLUTIONAL GENERATIVE ADVERSARIAL NETWORKS", 7 January 2016 (2016-01-07), pages 1 - 16, XP093190538, Retrieved from the Internet <URL:https://arxiv.org/pdf/1511.06434>**

**Description**

This application claims priority to Chinese Patent Application No. 202111176990.0, entitled "AUDIO PROCESSING METHOD, RELATED DEVICE, STORAGE MEDIUM, AND PROGRAM PRODUCT" filed with the China National Intellectual Property Administration on October 9, 2021.

FIELD OF THE TECHNOLOGY

The present disclosure relates to the field of computer technologies, and in particular, to audio processing.

BACKGROUND OF THE DISCLOSURE

With the continuous development of computer network technologies, packet loss usually occurs during transmission of audio data over the Internet, and partial audio data of transmitted audio cannot be received by a receiving end, which affects the listening experience of users.

In the related technology, an autoregressive iterative prediction method, that is, a method of sequentially predicting a succeeding sampling point on the basis of a preceding sampling point, is commonly adopted for compensation and recovery for lost audio packets.

An error is continuously accumulated during iterative prediction. Therefore, how to improve the accuracy of audio data obtained by prediction and compensation for lost audio packets becomes a current research hot spot.

Marafioty et al: "A Context Encoder for Audio Inpainting", ARXIV:1806.04885V2 (2019-12-01) and Lee Sun-Kyung "Deep Generative Music Inpainting with Mel-Spectrogram", KAIST (2020-01-01) both are examples for prediction and compensation for lost audio packets.

SUMMARY

Embodiments of the present disclosure provide an audio processing method, a related device, a storage medium, and a program product, which may improve the accuracy of prediction and compensation for lost audio packets.

In an aspect, the embodiments of the present disclosure provide an audio processing method, which includes: acquiring target audio data and frequency spectrum information of the target audio data, the target audio data having an audio missing segment, and the frequency spectrum information including a frequency spectrum feature of a context audio segment of the audio missing segment; performing feature compensation, by alternately performing upsampling and convolution, on the frequency spectrum information of the target audio data according to the frequency spectrum feature of the context audio segment to obtain compensated frequency spectrum information of the target audio data; performing audio prediction according to the compensated frequency spectrum information to obtain predicted audio data; and compensating for the audio missing segment in the target audio data according to the predicted audio data to obtain compensated audio data of the target audio data.

In another aspect, the embodiments of the present disclosure provide a computer device, which includes a processor, an input apparatus, an output apparatus, and a memory. The processor, the input apparatus, the output apparatus, and the memory are connected to each other, the memory is configured to store a computer program supporting the computer device to perform the foregoing method, the computer program includes program instructions, and the process is configured to invoke the program instructions to perform the steps of the audio processing method.

In still another aspect, the embodiments of the present disclosure provide a computer-readable storage medium, which stores program instructions that, when executed by a processor, implement the audio processing method according to the foregoing aspect.

In the embodiments of the present disclosure, after acquiring target audio data with an audio missing segment, a computer device may acquire frequency spectrum information of the target audio data, perform feature compensation on the frequency spectrum information based on a frequency spectrum feature of a context audio segment of the audio missing segment that is included in the frequency spectrum information to obtain compensated frequency spectrum information of the target audio data, and recognize the compensated frequency spectrum information to obtain more frequency spectrum information of the target audio data. In addition, after obtaining the compensated frequency spectrum information, the computer device may perform audio prediction according to the compensated frequency spectrum information to obtain predicted audio data, and compensate for the audio missing segment in the target audio data according to the predicted audio data and the target audio data to obtain compensated audio data of the target audio data. The computer device predicts and compensates for the audio missing segment according to frequency spectrum information of the overall context audio segment, so that the computer device may predict and compensate for the audio missing segment based on all frequency spectrum information of the target audio data, and the accuracy and rationality of prediction and compensation executable by the computer device on the audio missing segment may be improved.

BRIEF DESCRIPTION OF THE DRAWINGS

FIG. 1a is a schematic diagram of a scene of audio processing according to an embodiment of the present disclosure.

FIG. 1b is a schematic diagram of a scene of another audio processing according to an embodiment of the present disclosure.

FIG. 2 is a schematic flowchart of an audio processing method according to an embodiment of the present disclosure.

FIG. 3a is a schematic diagram of a connection between a frequency domain processing module and a generator according to an embodiment of the present disclosure.

FIG. 3b is a schematic diagram of target audio data and predicted audio data according to an embodiment of the present disclosure.

FIG. 4 is a schematic flowchart of another audio processing method according to an embodiment of the present disclosure.

FIG. 5a is a schematic diagram of a generator according to an embodiment of the present disclosure.

FIG. 5b is a schematic diagram of audio fusion according to an embodiment of the present disclosure.

FIG. 5c is a schematic diagram of another audio fusion according to an embodiment of the present disclosure.

FIG. 5d is a schematic diagram of a discriminator according to an embodiment of the present disclosure.

FIG. 5e is a schematic diagram of a generator and a discriminator according to an embodiment of the present disclosure.

FIG. 6 is a schematic block diagram of an audio processing apparatus according to an embodiment of the present disclosure.

FIG. 7 is a schematic block diagram of a computer device according to an embodiment of the present disclosure.

DESCRIPTION OF EMBODIMENTS

The embodiments of the present disclosure provide an audio processing method. According to the method, after acquiring target audio data with an audio missing segment, a computer device may predict and compensate for the audio missing segment according to a context audio segment of the audio missing segment in the target audio data. The computer device predicts the audio missing segment in the target audio data with reference to the context audio segment of the audio missing segment in the target audio data, so that the computer device can make full use of effective information of the target audio data during prediction of the audio missing segment, and the robustness of prediction and compensation executable by the computer device on the audio missing segment may be improved. In an embodiment, the target audio data may be call voice data, music data, an audio part in video data, or the like. The call voice data may be historical data acquired from an instant messaging application program, or may also be data generated in real time during a voice call. The voice call may be realized based on a mobile communication network (such as a second-generation mobile communication network), or may also be voice over Internet Protocol (VoIP) realized based on the Internet Protocol (IP). That is, the call voice data may be collected by a mobile device in a mobile communication network, or may also be intercepted from the Internet. In addition, the audio missing segment in the target audio data refers to a segment without audio data (or with 0 piece of audio data), the context audio segment of the audio missing segment includes a preceding audio segment and a succeeding audio segment of the audio missing segment, the preceding audio segment refers to an audio segment of which corresponding playback time is earlier than that of the audio missing segment in the target audio data, and the succeeding audio segment refers to an audio segment of which corresponding playback time is later than that of the audio missing segment in the target audio data.

During transmission of audio data (such as the foregoing target audio data) over network, a media engine cannot ensure that each audio stream data packet can be received. Therefore, in a case that a data packet (that is, a data segment in the target audio data) is lost during transmission, an audio receiving end cannot acquire complete audio data, which affects the playback experience of a user at the receiving end for the target audio data. In a case that the target audio data is call voice data, and a partial audio segment in the call voice data cannot be successfully received by the receiving end due to network transmission problems, the user at the receiving end will experience freezing during a voice call, which affects the audio quality and user's call experience during the call. To avoid impact on the listening effect of the user at the receiving end due to the loss of audio data during transmission, packet loss concealment (PLC) may be performed based on a context audio segment of a lost audio segment to improve the listening experience (or call experience) of the user at the receiving end. In an embodiment, when predicting and compensating for the audio missing segment according to the context audio segment of the audio missing segment in the target audio data, to make full use of audio recorded in the target audio data, the computer device may recognize and predict the context audio segment based on a non-autoregressive algorithm model, and compensate for the audio missing segment according to a recognition and prediction result of the context audio segment.

In the embodiments of the present disclosure including the embodiments of both the claims and the specification (hereinafter referred to as "all embodiments of the present disclosure"), the non-autoregressive algorithm model is preferably a non-recursive recognition process in which sequence markers are generated in parallel in a time sequence model without waiting for generation of a previous time marker. That is, the non-autoregressive algorithm model breaks a serial order in the recognition and prediction of the context audio segment, and may recognize the overall context audio segment to obtain a prediction result of the audio missing segment. In an embodiment, the non-autoregressive algorithm model may be a deep learning-based network model. For example, the computer device may adopt an end-to-end non-autoregressive model to compensate for the audio missing segment in the target audio data according to the context audio segment in the target audio data. In an implementation, when adopting the non-autoregressive algorithm model to recognize and predict the context audio segment of the audio missing segment, the computer device may transform the context audio segment from the time domain to the frequency domain, and compensate for the audio missing segment in the target audio data by recognizing frequency spectrum information of the context audio segment in the frequency domain. The time domain and the frequency domain are basic information of signals (including voice signals and audio signals), and are used for signal analysis of signals from different dimensions. Different perspectives used for analysis of signals may be referred to as domains. The time domain may reflect a corresponding relationship between a mathematical function or physical signal and time, is the feedback of the real world, and is an objectively existing domain in the real world. The frequency domain is a coordinate system used for describing characteristics of a signal in the frequency domain, is a method that is constructed from a mathematical perspective as an aid to thinking, and does not exist objectively. When analyzing a frequency spectrum of the context audio segment, the computer device may input a frequency spectrum feature of the context audio segment into a generator, and perform prediction based on the frequency spectrum feature of the context audio segment through the generator to obtain predicted audio data. Because the predicted audio data is audio data without an audio missing segment, after obtaining the predicted audio data, the computer device may perform data fusion on the predicted audio data and the original target audio data with the audio missing segment to obtain final audio data that will be played at the receiving end.

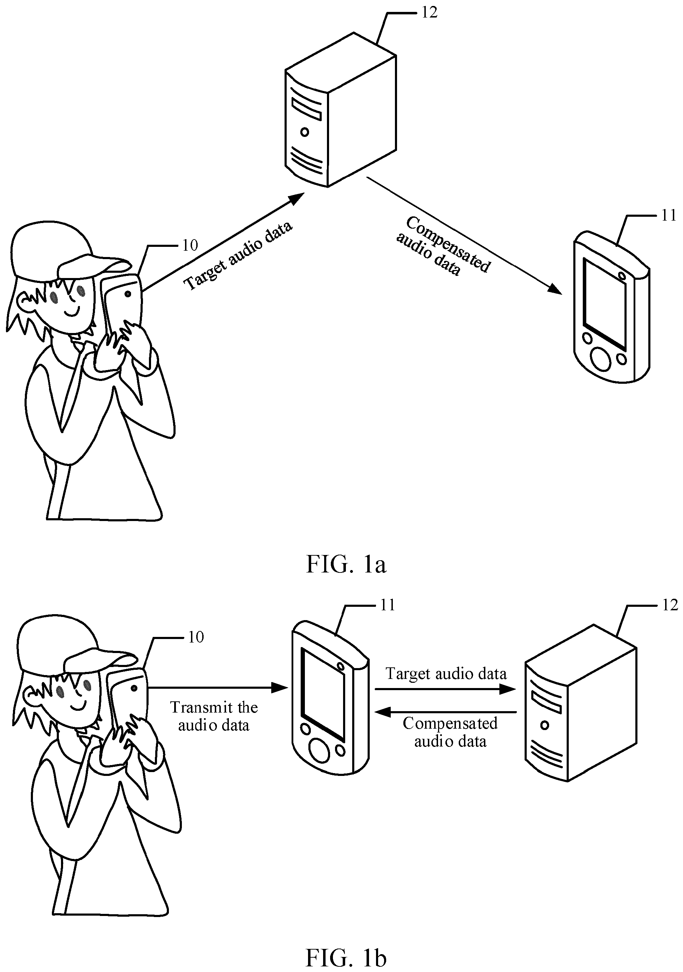

In all embodiments of the present disclosure, the computer device may be deployed between a transmission end and a receiving end of the target audio data. As shown in FIG. 1a, a device corresponding to the transmission end may be a device marked by 10 in FIG. 1a, a device corresponding to the receiving end may be a device marked by 11 in FIG. 1a, and the computer device may be a device deployed between the device 10 corresponding to the transmission end and the device 11 corresponding to the receiving end, and is marked by 12 in FIG. 1a. That is, the computer device 12 may intercept audio data when the device 10 corresponding to the transmission end transmits the audio data to the device 11 corresponding to the receiving end, take the intercepted audio data as target audio data in case that it is detected that the intercepted audio data has an audio missing segment, compensate for the audio missing segment according to a frequency spectrum feature of context audio data of the audio missing segment in the target audio data to obtain compensated audio data of the target audio data after the target audio data is compensated and recovered, and transmit the compensated audio data to the device 11 corresponding to the receiving end. In another implementation, after the device 10 corresponding to the transmission end transmits audio data to the device 11 corresponding to the receiving end, the device 11 corresponding to the receiving end may take the audio with a missing segment as target audio data in a case that the device 11 corresponding to the receiving end detects the missing of a partial audio segment in the audio data acquired from the device 10 corresponding to the transmission end, and transmit the target audio data to the computer device 12. As specifically shown in FIG. 1b, after predicting and compensating for the audio missing segment in the target audio data, the computer device 12 may feed back compensated audio data to the device 11 corresponding to the receiving end. In all embodiments of the present disclosure, the computer device may be a terminal device, or may also be a server, which is not defined herein. Moreover, the computer device may also be a module integrated into the device corresponding to the receiving end or the device corresponding to the transmission end. In addition, the computer device may include, but is not limited to, a mobile phone, a computer, an intelligent voice interaction device, an intelligent household electrical appliance, an on-board terminal, and the like.

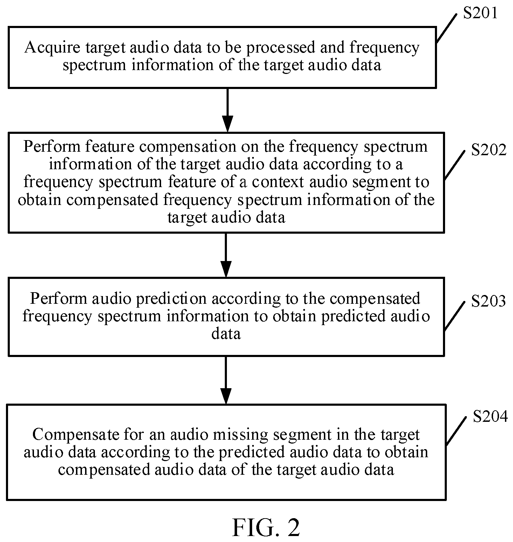

Referring to FIG. 2, FIG. 2 is a schematic flowchart of an audio processing method according to an embodiment of the present disclosure. As shown in FIG. 2, the method may include the following steps S201 to S204.

S201: Acquire target audio data and frequency spectrum information of the target audio data.

In all embodiments of the present disclosure, the target audio data may refer to any audio data with an audio missing segment. The audio data may be music data, voice data, audio content in video data, or the like. In all embodiments of the present disclosure, the audio data may mainly refer to voice data that may be voice data generated in real time during a call or may also be historical voice data, and the voice data may include call voice, or may also include a voice message and the like in a social application program. After acquiring the target audio data that is time domain data, a computer device requires a lot of computing resources for time domain data processing. In a case that the computer device determines that a lot of computing resources are required for direct processing of the target audio data, the computer device may acquire frequency spectrum information of the target audio data, and map the frequency domain processing of the frequency spectrum information of the target audio data to the time domain analysis of the target audio data, so that the computer device can analyze the target audio data with a few of computing resources, and computing resources of the computer device can be effectively saved.

The target audio data acquired by the computer device has the audio missing segment, and the audio missing segment is represented as 0 in the time domain, that is, a partial frequency band of the target audio data is represented as 0 in the time domain. After the target audio data is mapped from the time domain to the frequency domain to obtain frequency spectrum information of the target audio data, a frequency spectrum, corresponding to the audio missing segment, in the frequency spectrum information of the target audio data is generally represented as 0. The computer device may adopt the short-time Fourier transform, or may also adopt the Mel-spectrum analysis (a time-to-frequency domain transformation method), or may also adopt a method of combining the short-time Fourier transform and the Mel-spectrum analysis to map the target audio data from the time domain to the frequency domain. The computer device may invoke a frequency domain processing module in the computer device to map the target audio data to the frequency domain. The frequency domain processing module may map the target audio data to the frequency domain according to an acquired sampling rate, an audio length (or an audio extraction length), a Fourier transform window length, and a Fourier transform window interval to obtain frequency spectrum information of the target audio data. The acquired sampling rate may be 16k, the audio length may be 512 milliseconds (ms), the Fourier transform window length may be 1024, and the Fourier transform window interval may be 256. The sampling rate of 16k refers to that 1ms corresponds to 16 sampling points, so the audio length of 512ms corresponds to 8192 sampling points. After obtaining the 8192 sampling points corresponding to the target audio data in the time domain, the computer device may map the obtained sampling points to the frequency domain to obtain frequency spectrum information of the target audio data.

Based on the audio missing segment in the target audio data, an audio segment, having a time domain representation and corresponding playback time earlier than that of the audio missing segment, in the target audio data may be referred to as a preceding audio segment in the target audio data, and an audio segment, having a time domain representation and corresponding playback time later than that of the audio missing segment, in the target audio data may be referred to as a succeeding audio segment in the target audio data. The preceding audio segment and the succeeding audio segment may be collectively referred to as a context audio segment in the target audio data.

The frequency spectrum information of the target audio data includes a frequency spectrum feature of the context audio segment of the audio missing segment, that is, a frequency spectrum feature of the preceding audio segment and a frequency spectrum feature of the succeeding audio segment of the audio missing segment. The computer device may perform feature compensation on the frequency spectrum information of the target audio data based on the frequency spectrum feature of the context audio segment, that is, perform S202.

S202: Perform feature compensation on the frequency spectrum information of the target audio data according to the frequency spectrum feature of the context audio segment to obtain compensated frequency spectrum information of the target audio data.

The feature compensation executable by the computer device on the frequency spectrum information of the target audio data based on the frequency spectrum feature of the context audio segment includes at least upsampling. In all embodiments of the present disclosure, the computer device may perform upsampling on the frequency spectrum information of the target audio data by bilinear interpolation or nearest-neighbor interpolation. After upsampling of the frequency spectrum information of the target audio data is completed, the computer device may add more feature information to the frequency spectrum information, so that when predicting and compensating for the audio missing segment in the target audio data subsequently, the computer device may acquire more frequency spectrum features from the frequency spectrum information subjected to upsampling to improve the accuracy of prediction and compensation executable by the computer device on the audio missing segment. In addition, the feature compensation executable by the computer device on the frequency spectrum information of the target audio data may further include convolution performed on the frequency spectrum information of the target audio data based on the context audio segment. By performing convolution on the frequency spectrum information, the computer device may perceive more context information during feature compensation of the target audio data to expand a feature receptive field. Based on the expanded feature receptive field, the computer device may add various frequency spectrum features corresponding to different scales to the frequency spectrum information of the target audio data when performing feature compensation on the frequency spectrum information of the target audio data, so that the richness and rationality of features in compensated frequency spectrum information that is obtained by the computer device by performing feature compensation on the frequency spectrum information of the target audio data may be effectively improved.

In all embodiments of the present disclosure, the computer device may perform upsampling once or multiple times during feature compensation of the frequency spectrum information of the target audio data. After performing upsampling each time, the computer device may perform convolution once, that is, the computer device performs feature compensation on the frequency spectrum information of the target audio data by alternately performing upsampling and convolution. Because the computer device performs further sampling on the sampling points of the target audio data when acquiring the frequency spectrum information of the target audio data, when performing feature compensation on the frequency spectrum information of the target audio data, the computer device may perform feature restoration by upsampling based on the sampling points in the frequency spectrum information. That is, when performing feature restoration on the frequency spectrum information of the target audio data, the computer device performs feature compensation according to the quantity of sampling points included in the frequency spectrum information and the quantity of sampling points for sampling the target audio data in the time domain, so that the quantity of sampling points in compensated frequency spectrum information obtained by the computer device by performing feature compensation on the frequency spectrum information is consistent with the quantity of sampling points corresponding to the target audio data in the time domain, and the rationality of feature compensation executable by the computer device on the frequency spectrum information of the target audio data may be ensured.

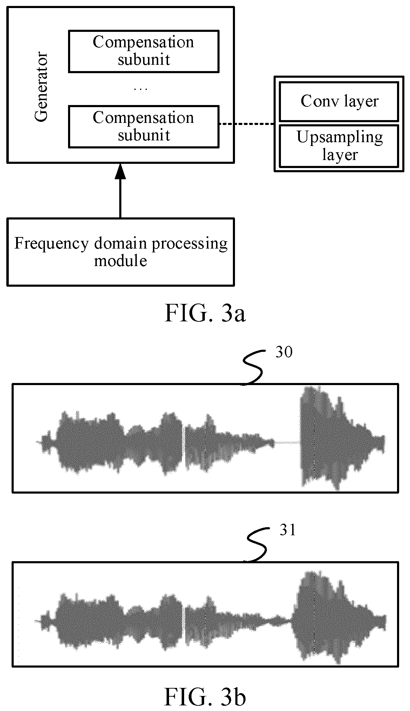

In all embodiments of the present disclosure, the computer device may invoke a generator in the computer device to perform feature compensation on the frequency spectrum information of the target audio data. The generator is connected to the foregoing frequency domain processing module configured to obtain the frequency spectrum information of the target audio data, that is, an output of the foregoing frequency domain processing module is an input of the generator. As specifically shown in FIG. 3a, the generator includes one or more compensation subunits of different scales, and each compensation subunit includes a conv layer and an upsampling layer. When invoking the generator to perform feature compensation on the frequency spectrum information of the target audio data, the computer device inputs the frequency spectrum information of the target audio data into the generator, and invokes the one or more compensation subunits of different scales in the generator to perform iteration on the frequency spectrum information. Upsampling frequencies in different compensation subunits in the generator may be the same or different, and convolution depths and scales of the conv layers in different compensation subunits may also be the same or different. After obtaining the compensated frequency spectrum information of the target audio data, the computer device may predict and compensate for the audio missing segment in the target audio data based on the compensated frequency spectrum information, that is, perform S203.

S203: Perform audio prediction according to the compensated frequency spectrum information to obtain predicted audio data.

S204: Compensate for the audio missing segment in the target audio data according to the predicted audio data to obtain compensated audio data of the target audio data.

In S203 and S204, after obtaining the compensated frequency spectrum information of the target audio data, the computer device may first perform audio prediction according to the compensated frequency spectrum information to obtain predicted audio data. In all embodiments of the present disclosure, when performing audio prediction according to the compensated frequency spectrum information, the computer device may perform audio prediction based on all frequency spectrum features in the compensated frequency spectrum information, that is, the computer device performs prediction based on the compensated frequency spectrum information to obtain predicted data of all frequency bands in the target audio data. As specifically shown in FIG. 3b, in a case that the target audio data with the audio missing segment that is acquired by the computer device is audio data marked by 30 in FIG. 3b, the computer device recognizes the target audio data to obtain compensated frequency spectrum information of the target audio data, and obtains predicted audio data, which is audio data marked by 31 in FIG. 3b, according to the compensated frequency spectrum information. It can be seen from the predicated audio data obtained by the computer device that when predicting and compensating for the audio missing segment in the target audio data, the computer device first obtains predicted audio data corresponding to the target audio data, and then compensates for the audio missing segment in the target audio data based on the target audio data and the predicted audio data to obtain compensated audio data of the target audio data.

In all embodiments of the present disclosure, the computer device may compensate for the audio missing segment in the target audio data according to the target audio data and the predicted audio data, and a corresponding waveform and a data distribution of the predicted audio data obtained by the computer device by performing prediction according to the compensated frequency spectrum information are not completely consistent with those of the original target audio data. Therefore, when performing compensation and recovery according to the target audio data and the predicted audio data, the computer device may first determine a predicted missing segment corresponding to the audio missing segment in the target audio data from the predicted audio data, and then replace the audio missing segment in the target audio data with the predicted missing segment to obtain compensated audio data of the target audio data. In another implementation, after obtaining the predicted audio data corresponding to the target audio data, the computer device may first determine a previous audio segment and a next audio segment of the audio missing segment from the target audio data and the predicted audio data. A segment end of the previous audio segment and a segment start of the audio missing segment are the same audio point, and a segment start of the next audio segment and a segment end of the audio missing segment are the same audio point. The computer device may further perform transition fusion according to the determined audio segments, and then generate compensated audio data according to an audio segment obtained by the transition fusion, so that the computer device may smoothly integrate the audio missing segment into the compensated audio data, the compensated audio data has characteristics of smooth transition, and the smoothness of playback of the compensated audio data when played by the receiving end device may also be improved.

In all embodiments of the present disclosure, the computer device may perform transition fusion according to the determined audio segments in a fade-in and fade-out way. The fade-in and fade-out fusion method is a linear superposition method, that is, a method for linearly superimposing the target audio data and the compensated audio data. To improve the smoothness of linear superposition of the target audio data and the compensated audio data, the computer device may adjust the previous audio segment and the next audio segment of the audio missing segment when compensating for the audio missing segment in the target audio data based on the predicted audio data, so that an audio missing segment in the compensated audio data is smoothly transitioned, and the playback effect of the compensated audio data obtained by fusion is improved. In addition, when obtaining compensated audio data of the target audio data according to the target audio data and the predicted audio data, the computer device may fuse audio data obtained by transition fusion and the target audio data, or may also fuse the audio data obtained by transition fusion and the predicted audio data to obtain compensated audio data of the target audio data. The compensated audio data refers to data without an audio missing segment.

In all embodiments of the present disclosure, after acquiring target audio data with an audio missing segment, a computer device may acquire frequency spectrum information of the target audio data, perform feature compensation on the frequency spectrum information based on a frequency spectrum feature of a context audio segment of the audio missing segment that is included in the frequency spectrum information to obtain compensated frequency spectrum information of the target audio data, and recognize the compensated frequency spectrum information to obtain more frequency spectrum information of the target audio data. In addition, after obtaining the compensated frequency spectrum information, the computer device may perform audio prediction according to the compensated frequency spectrum information to obtain predicted audio data, and compensate for the audio missing segment in the target audio data according to the predicted audio data and the target audio data to obtain compensated audio data of the target audio data. The computer device predicts and compensates for the audio missing segment according to frequency spectrum information of the overall context audio segment, so that the computer device can predict and compensate for the audio missing segment based on all frequency spectrum information of the target audio data, and the accuracy and rationality of prediction and compensation executable by the computer device on the audio missing segment may be improved.

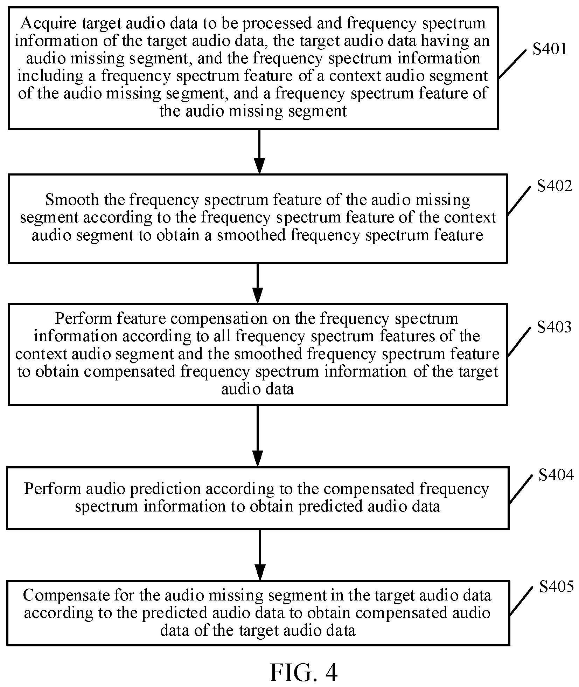

Referring to FIG. 4, FIG. 4 is a schematic flowchart of an audio processing method according to an embodiment of the present disclosure. As shown in FIG. 4, the method may include the following steps S401 to S405.

S401: Acquire target audio data and frequency spectrum information of the target audio data, the target audio data having an audio missing segment, and the frequency spectrum information including a frequency spectrum feature of a context audio segment of the audio missing segment and a frequency spectrum feature of the audio missing segment.

The target audio data which is acquired by a computer device may be audio data with an audio missing segment that is actually acquired by the computer device, or may also be sample data that is extracted from training audio data. After acquiring the target audio data, the computer device may recognize the frequency spectrum information of the target audio data to obtain predicted audio data, perform audio prediction based on all available frequency spectra of the target audio data, and further predict and compensate for the audio missing segment in the target audio data based on the predicted audio data and the target audio data. After acquiring the target audio data, the computer device invokes a generator to recognize the frequency spectrum information of the target audio data so as to obtain predicted audio data. Thus, the computer device may train the generator by acquiring sample data.

In an implementation, the computer device may train the generator (or the generator and a discriminator) with reference to a discrimination result of data outputted by the generator that is obtained through a discriminator. Both the generator and the discriminator are deep learning-based network structures. The generator and the discriminator may be designed together based on a model structure of a generative adversarial network (GAN) model, or the generator and the discriminator may be respectively designed based on a deep learning-based generator model and discrimination model. In all embodiments of the present disclosure, in a case that the generator and the discriminator are designed based on the model structure of the generative adversarial network, a process of training the generator by the computer device may be a process of training the discriminator. That is, in this case, the computer device needs to perform adversarial training on both the generator and the discriminator to finally obtain trained network models. When the generator and the discriminator are designed based on the model structure of the generative adversarial network, a convolutional neural network (CNN) is mainly used for the generator. In a case that the generator and the discriminator are respectively designed, the computer device may train the generator and the discriminator, respectively, to optimize the generator and the discriminator, respectively.

In all embodiments of the present disclosure, when the generator is designed, a sampling rate and an audio extraction length may be specified. In a case that the target audio data is data extracted by the generator from the training audio data, when acquiring the target audio data, the computer device may first invoke the generator to extract intermediate audio data with a length equal to the audio extraction length from the training audio data. Then, the computer device may invoke the generator to sample the intermediate audio data according to a target sampling rate so as to obtain a sampling sequence of the intermediate audio data, perform simulative packet loss adjustment on multiple sampling points in the sampling sequence according to a preset packet loss length to obtain target audio data. The simulative packet loss adjustment is an adjustment method for simulating packet loss by specifically adjusting sampling points. For example, the multiple sampling points may be adjusted to 0, and the sampling points adjusted to 0 are taken as the audio missing segment in the target audio data. The training audio data includes audio data in one or more languages, such as Chinese, English, and German. Moreover, the training audio data may be audio data of one person, or may also be audio data of many persons. An audio length of the acquired training audio data exceeds 500 hours. In all embodiments of the present disclosure, some or all audio processing parameters that are specified in the generator may be as shown in Table 1.

Table 1

| Parameter name | Parameter value | Parameter name | Parameter value |
|---|---|---|---|
| Sampling rate | 16k | Generator amplification | [8, 8, 2, 2] |
| Audio extraction length | 512ms | Convolution kernel size | 3 |
| Fourier transform window length | 1024 | Single audio packet length | 10ms |
| Fourier transform window interval | 256 | Random quantity of lost packets | 1-12 |
| Batch_size | 32 | Lengths before and after fusion | 20ms |

Batch_size refers to the size of each batch of data, that is, the quantity of samples that are trained together each time. By training samples in batches, an average loss function value of the samples may be calculated, and parameters of the network model may be updated. Batch_size generally takes the value of 32.

In a case that the generator directly processes the training audio data, a lot of computing resources in the computer device will be consumed based on the audio length of the training audio data. Therefore, the generator may extract intermediate audio data from the training audio data based on a set audio extraction length (which is assumed to be 512ms), and sample the intermediate audio data based on a target sampling rate (which is assumed to be 16k) to obtain a sampling sequence of the intermediate audio data. In this case, the obtained sampling sequence of the intermediate audio data includes 8192 sampling points. Further, the computer device may randomly set K pieces of audio data in the 8192 sampling points as 0 to simulate audio missing segments in the target audio data. A length of each piece of audio data is the preset packet loss length that is set in the generator, which may be assumed to be 10-120ms. K is a positive integer less than or equal to 3. In another implementation, the generator may further randomly discard the 8192 sampling points in the sampling sequence of the intermediate audio data based on the set number (which is assumed to be 1-12) of packet loss segments, so that the target audio data which is acquired by the computer device is audio data including an audio missing segment.

In all embodiments of the present disclosure, the audio missing segment included in the target audio data that is acquired by the computer device may also become packet loss data or a mask audio segment. When training the generator, the computer device takes audio data without packet loss as original audio data, and continuously trains model parameters of the generator, so that the generator performs prediction according to the context information in the frequency spectrum information of the target audio data to obtain predicted audio data whose similarity with the original audio data satisfies a threshold value, and predicts and compensates for the mask audio segment.

In addition, in a case that the computer device directly invokes the generator to process the sampling sequence of the target audio data after acquiring the 8192 sampling points of the target audio data, the computer device will consume a lot of time due to the excessive input of the network. Therefore, after obtaining the sampling sequence of the target audio data, the computer device may first perform digital signal processing on the target audio data to transform the target audio data from the time domain to the frequency domain so as to obtain frequency spectrum information of the target audio data. The computer device may transform the target audio data from the time domain to the frequency domain with reference to the parameters in Table 1. The computer device may transform the 8192 sampling points into a 32*80 frequency spectrogram (that is, the frequency spectrum information) by frequency domain transformation. In this case, features of the frequency spectrum information that are recognized by the computer device by invoking the generator include [N, 32, 80], 80 refers to the preset quantity of channels, N refers to the quantity of a batch of iterations that are inputted into the generator during training of the generator, N is equal to the value of Batch_size in Table 1, and when the trained generator is used to predict and compensate for an actual audio missing segment, N takes the value of 1.

S402: Smooth the frequency spectrum feature of the audio missing segment according to the frequency spectrum feature of the context audio segment to obtain a smoothed frequency spectrum feature.

S403: Perform feature compensation on the frequency spectrum information according to all frequency spectrum features of the context audio segment and the smoothed frequency spectrum feature to obtain compensated frequency spectrum information of the target audio data.

S404: Perform audio prediction according to the compensated frequency spectrum information to obtain predicted audio data.

In S402 to S404, after acquiring the frequency spectrum feature of the context audio segment that is included in the frequency spectrum information of the target audio data, the computer device performs prediction and compensation according to the frequency spectrum feature of the context audio segment. The frequency spectrum information of the target audio data further includes the frequency spectrum feature of the audio missing segment, and the frequency spectrum feature of the audio missing segment is represented as 0 in the frequency domain. Therefore, to avoid a situation where compensated frequency spectrum information that is obtained by subsequently performing feature compensation on the frequency spectrum information of the target audio data based on the frequency spectrum feature of the context audio segment includes many 0, the computer device may first smooth the frequency spectrum feature of the audio missing segment to adjust sampling points originally corresponding to 0 in the frequency spectrum information of the target audio data to non-0 sampling points. Thus, when subsequently performing feature compensation, the computer device will not add many sampling points corresponding to 0 to the frequency spectrum information of the target audio data. The smoothing of the frequency spectrum feature of the audio missing segment may improve the compensation effect of feature compensation subsequently performed on the frequency spectrum information. When smoothing the frequency spectrum feature of the audio missing segment, the computer device will also smooth the frequency spectrum feature of the context audio segment at the same time. In a specific implementation, the computer device may perform convolution once on the frequency spectrum information of the target audio data through a conv layer to smooth the frequency spectrum feature of the audio missing segment and the frequency spectrum feature of the context audio segment.

After smoothing the frequency spectrum feature of the audio missing segment based on the frequency spectrum feature of the context audio segment, the computer device may perform feature compensation on the frequency spectrum information according to the frequency spectrum feature of the context audio segment and the smoothed frequency spectrum feature of the audio missing segment. In a specific implementation, the computer device may first acquire a frequency spectrum length of frequency spectrum information composed of the frequency spectrum feature of the context audio segment and the smoothed frequency spectrum feature, and the frequency spectrum length is used for indicating the quantity of feature points in the frequency spectrum information. For example, the acquired frequency spectrum length of the frequency spectrum information may be 8192. After acquiring the frequency spectrum length, the computer device may determine the quantity of sampling points in the sampling sequence corresponding to the target audio data according to the sampling rate and the audio extraction length at which the target audio data is obtained, and perform upsampling on the frequency spectrum information according to the quantity of sampling points, to make the quantity of feature points in the frequency spectrum information be equal to the quantity of sampling points. Then, frequency spectrum information subjected to upsampling may be taken as compensated frequency spectrum information of the target audio data.

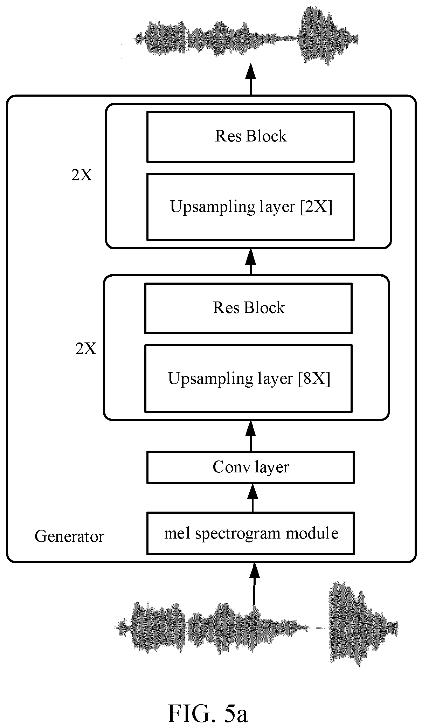

A process of generation of the predicted audio data based on the compensated frequency spectrum information after the computer device performs feature compensation on the frequency spectrum information to obtain the compensated frequency spectrum information of the target audio data may be as shown in FIG. 5a. The computer device may first invoke a frequency domain generation module (a mel spectrogram module shown in FIG. 5a) in the generator to map the target audio data to the frequency domain so as to obtain frequency spectrum information of the target audio data, and further perform convolution once through the conv layer to smooth the frequency spectrum feature of the audio missing segment in the frequency spectrum information. In all embodiments of the present disclosure, as shown in FIG. 5a, after performing smoothing, the computer device may perform feature compensation on the smoothed frequency spectrum feature by performing 8-fold upsampling twice and 2-fold upsampling twice. In a case that the target audio data acquired by the computer device includes 8192 sampling points, frequency spectrum information of the target audio data that is obtained by the computer device according to the frequency domain mapping parameters in Table 1 may be a 32*80 frequency spectrogram. By performing 8-fold upsampling twice and 2-fold upsampling twice, a length dimension of the frequency spectrogram may be expanded to 32*8*8*2*2=8192.

In addition, the computer device performs upsampling once or more times on the frequency spectrum information according to the quantity of sampling points. After performing upsampling once, the computer device may perform multi-scale convolution operation on frequency spectrum information subjected to upsampling once to obtain all frequency spectrum features of the context audio segment. When performing multi-scale convolution operation, the computer device may perform deep convolution operation based on a res block structure (a convolution residual network structure) in FIG. 5a. The res block structure includes multiple network layers, and is configured to expand a frequency spectrum feature receptive field through multi-layer convolution. Specifically, the res block structure may include 4 network layers, which are a 3*3 conv layer, a 5*5 conv layer, a 3*3 conv layer, and a 3*3 conv layer, respectively.

After obtaining the compensated frequency spectrum information of the target audio data, the computer device may compress the quantity of channels of the compensated frequency spectrum information to obtain predicted audio data. The computer device may adjust the quantity of frequency spectrum channels of the compensated frequency spectrum information to 1 to obtain predicted audio data. In all embodiments of the present disclosure, the compensated frequency spectrum information that is obtained by the computer device by invoking the generator may be [8192, 80], and after acquiring the compensated frequency spectrum information, the computer device may compress the quantity of channels from 80 to 1 based on the compensated frequency spectrum information to transform the compensated frequency spectrum information into time domain information. It will be appreciated that the time domain information obtained by transforming the compensated frequency spectrum information is predicted audio data obtained by performing audio prediction based on the compensated frequency spectrum information, and the predicted audio data is obtained based on the entire compensated frequency spectrum information and is audio data without an audio missing segment. Thus, the computer device may predict entire audio based on learning of the context of the audio missing segment, and the computer device may compensate for the audio missing segment in the target audio data according to more valid information. Moreover, the computer device performs non-autoregressive end-to-end one-time prediction to obtain predicted audio data, that is, compensates for all packet loss segments of an input once in a case that the input includes multiple packet loss segments, so that the computer device may obtain accurate predicted audio data, and meanwhile the calculation time of the computer device may be effectively saved.

S405: Compensate for the audio missing segment in the target audio data according to the predicted audio data to obtain compensated audio data of the target audio data.

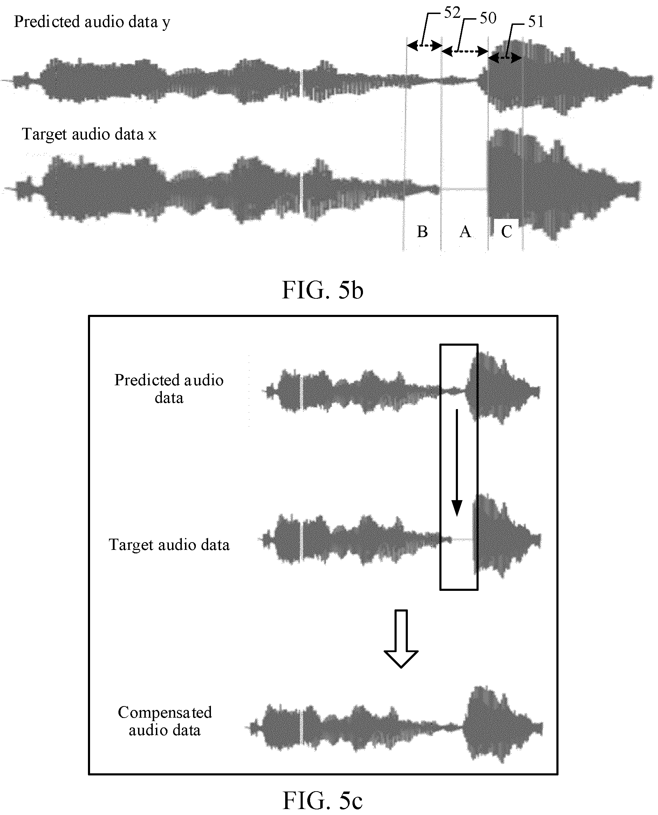

After obtaining the predicted audio data, the computer device may compensate for the audio missing segment in the target audio data according to the predicted audio data. In a specific implementation, the computer device may perform audio fusion on the target audio data and the predicted audio data based on the audio missing segment to obtain compensated audio data of the target audio data. Because a waveform of the predicted audio data generated by the computer device is not completely consistent with a waveform of the target audio data, the computer device may perform audio fusion on the target audio data and the predicted audio data based on the audio missing segment in a fade-in and fade-out way, so that the audio missing segment is more smoothly integrated into the original audio, and the original audio is smoothly transited. When performing audio fusion in a fade-in and fade-out way, the computer device may first determine a predicted missing segment corresponding to the audio missing segment from the predicted audio data, and determine an predicted associated segment of the predicted missing segment from the predicted audio data. As shown in FIG. 5b, the predicted missing segment corresponding to the audio missing segment that is determined by the computer device is marked by 50 in FIG. 5b, the predicted associated segment may include audio segments respectively marked by 51 and 52 in FIG. 5b, the audio segment marked by 51 in FIG. 5b may also be referred to as an audio fusion segment after packet loss (postaudio), and the audio segment marked by 52 may also be referred to as an audio fusion segment before packet loss (preaudio). After determining the predicted missing segment and the predicted associated segment, the computer device further determines fusion parameters, and smooths the predicted associated segment according to the fusion parameters to obtain a smoothed predicted associated segment. The fusion parameters may be determined by formula 1.1.

$$\alpha = \frac{t}{N}, \beta = 1 - \frac{t}{N} \qquad \text{formula } 1.1$$

where, t represents the time corresponding to a sampling point, N represents the total quantity of sampling points included in a segment where the sampling point is located, and calculated fusion parameters include $\alpha$ and $\beta$ in the foregoing formula. After obtaining the fusion parameters, the computer device may smooth the predicted associated segment based on the fusion parameters in combination with the predicted audio data (of which a corresponding sequence is assumed to be y) and the target audio data (of which a corresponding sequence is assumed to be x), and a smoothed predicted associated segment may refer to formula 2.1 and formula 2.2.

$$\text{preaudio} = \alpha * y + \beta * x \qquad \text{formula } 2.1$$

$$\text{postaudio} = \alpha * x + \beta * y \qquad \text{formula } 2.2$$

where, preaudio represents a packet loss preceding text (or an audio fusion segment before packet loss), and postaudio represents a packet loss succeeding text (or an audio fusion segment after packet loss). In the predicted audio data, the computer device may further replace a corresponding audio segment in the predicted audio data with the smoothed predicted associated segment to obtain fused audio data, or in the target audio data, the computer device may replace the corresponding audio segment in the predicted audio data with the smoothed predicted associated segment, and replace the audio missing segment with the predicted missing segment to obtain fused audio data. By fusing the context segment in the predicted audio data based on the audio missing segment, the generated audio missing segment may be smoothly transited in the compensated audio data, thereby improving the quality of the audio. A process of fusing the target audio data and the predicted audio data to finally obtain compensated audio data by the computer device may be as shown in FIG. 5c.

In all embodiments of the present disclosure, in a case that the target audio data is data extracted by the generator from training audio data, when training the generator, after the computer device invokes the generator to obtain the compensated audio data, the computer device may invoke the discriminator to recognize compensated audio data generated by the generator, and continuously optimize the generator through adversarial training between the discriminator and the generator, so that a difference between the compensated audio data generated by the generator and the original audio data is continuously reduced. The discriminator is a classification network, and is mainly configured to determine whether the generated compensated audio data is the original audio data. The adversarial learning process of the discriminator and the generator makes the discriminator unable to distinguish the difference between the compensated audio data learned and generated by the generator and the original audio data, thereby improving the quality of the audio data generated by the generator. The original audio data may be audio data without an audio missing segment that is acquired by the computer device from training sample data.

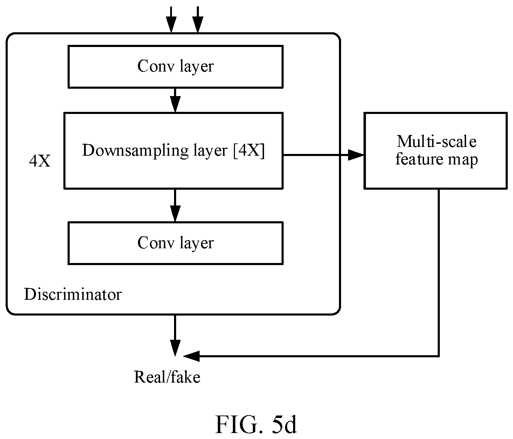

The discriminator may be specifically as shown in FIG. 5d. The discriminator mainly adopts convolution operation and downsampling operation to extract feature maps at different resolutions from the compensated audio data, and the feature maps are used for subsequently solving a loss function. That is, after invoking the discriminator to extract feature maps at different resolutions from the compensated audio data, the computer device may determine, according to the feature maps of the compensated audio data at different resolutions, a feature difference between the compensated audio data and the intermediate audio data from which the target audio data is obtained, and train the generator and the discriminator to obtain a trained generator and a trained discriminator. The loss function used for training the generator and the discriminator includes one or more of the following: a discriminator loss function, a generator loss function, and a multi-resolution loss function (that is, a stft loss function). In all embodiments of the present disclosure, the discriminator loss function and the generator loss function may be loss functions used for time domain analysis of audio data, and the multi-resolution loss function is a loss function used for frequency domain analysis of audio data.

In all embodiments of the present disclosure, when training the generator and the discriminator according to the feature maps at different resolutions, the computer device may first determine a time domain feature of the compensated audio data according to the feature maps of the compensated audio data at different resolutions. After acquiring a time domain feature difference between the compensated audio data and the intermediate audio data from which the target audio data is obtained, the computer device may acquire a consistency discrimination result of the compensated audio data and the intermediate audio data that is determined by the discriminator based on the time domain feature difference. The computer device may determine the discriminator loss function according to the consistency discrimination result, then determine the generator loss function according to the time domain feature difference, and train the generator and the discriminator according to the generator loss function and the discriminator loss function. A process of training the generator and the discriminator according to the generator loss function and the discriminator loss function may be that the generator is trained according to the generator loss function, and the discriminator is trained according to the discriminator loss function, or may also be that the generator and the discriminator are trained together according to a combined loss function composed of the generator loss function and the discriminator loss function. If x is original audio data (or real audio data, that is, may be the foregoing intermediate audio data), s is audio data (such as the foregoing target audio data) that has a lost packet and is inputted into the generator, and z is random noise, the discriminator loss function may be represented as formula 3.1 and formula 3.2.

$$\text{Loss}_D = \min_{D_k} E_x[\min(0, 1 - D_k(x))] + E_{s,z}[\min(0, 1 + D_k(G(s, z)))] \qquad \text{formula 3.1}$$

$$\text{Loss}_D = \min_{D_k} E_x[\min(0, 1 - D_k(x))] + E_{s,z}[\min(0, 1 + D_k(G(s, z)))] +$$

$$\min_G E_{s,z}[-D_k(G(s, z))] \qquad \text{formula 3.2}$$

where, G(s, z) refers to an expression corresponding to audio data (such as the foregoing compensated audio data) generated by the generator, $D_k(x)$ refers to feature maps at different resolutions that are obtained by the discriminator by sampling original audio data, and $D_k(G(s, z))$ refers to feature maps at different resolutions that are obtained by the discriminator by sampling the audio data generated by the generator.

It is expected that the audio data generated by the generator is as similar as possible to the original audio data. Therefore, higher weights may be assigned to a mask segment (such as the foregoing audio missing segment) to verify the ability of the generator to generate the missing segment. If a weight corresponding to the audio missing segment is w, the generator loss function may be represented as formula 4.1.

$$\text{Loss}_G = \text{L1}\big(x, G(s, z)\big) + w(x_{\text{mask}}, G(s, z)_{\text{mask}}) \qquad \text{formula 4.1}$$

In all embodiments of the present disclosure, both the foregoing discriminator loss function $\text{Loss}_D$ and the generator loss function $\text{Loss}_G$ may be loss functions used for time domain analysis of audio data. In addition, multi-frequency band information of audio is taken into account, so that audio generated by the generator has a better effect on each frequency band. During training, a resolution (STFT) loss function may also be taken in account to improve the stability of audio generated by the generator. The multi-resolution loss function refers to accumulation of audio in different parameters (such as an FFT length, a frame shift length, and a window size). Thus, the computer device may determine a frequency spectrum feature of the feature map of the compensated audio data at any resolution, and acquire a frequency spectrum feature of the intermediate audio data (that is, the original audio data) of the target audio data. Then, the computer device may obtain a spectrum convergence function of the feature map at any resolution according to the frequency spectrum feature of the feature map at any resolution and the frequency spectrum feature of the intermediate audio data. In all embodiments of the present disclosure, if x is original audio data, y is reconstructed audio data (such as the foregoing compensated audio data or predicted audio data), and $L_{sc}$ represents a spectrum convergence, the foregoing spectrum convergence function may be represented as formula 5.1.

$$L_{sc}(x, y) = \frac{\||\text{STFT}(x)| - |\text{STFT}(y)|\|}{|\text{STFT}(x)|} \qquad \text{formula 5.1}$$

After obtaining the spectrum convergence function of the feature map at any resolution, the computer device may solve the multi-resolution loss function according to the spectrum convergence function of the feature maps at different resolutions, and train the generator and the discriminator based on the multi-resolution loss function. In a specific implementation, when obtaining the spectrum convergence function of the feature map at any resolution according to the frequency spectrum feature of the feature map at any resolution and the frequency spectrum feature of the intermediate audio data, the computer device may determine, in a case that the frequency spectrum feature of the intermediate audio data is taken as a reference feature, a spectrum convergence function of the feature map at any resolution according to the frequency spectrum feature of the feature map at any resolution and the frequency spectrum feature of the intermediate audio data. The spectrum convergence function is used for indicating a frequency spectrum difference between the frequency spectrum feature of the intermediate audio data and the feature map at any resolution. Thus, when solving the multi-resolution loss function according to the spectrum convergence function of the feature maps at different resolutions, the computer device may first acquire a frequency spectrum magnitude difference between the frequency spectrum feature of the feature map at any resolution and the frequency spectrum feature of the intermediate audio data to obtain a magnitude difference function. As described above, if x is original audio data, y is reconstructed audio data (such as the foregoing compensated audio data or predicted audio data), and $L_{mag}$ represents a resolution loss logarithm, the foregoing magnitude difference function may be represented as formula 6.1.

$$L_{mag}(x, y) = \frac{\|\log|\text{STFT}(x)| - \log|\text{STFT}(y)|\|}{N} \qquad \text{formula 6.1}$$

After obtaining the spectrum convergence function and the magnitude difference function, the computer device may take a function obtained by weighting the spectrum convergence function of the feature maps at different resolutions and the corresponding magnitude difference function as a multi-resolution loss function. The weighting of the spectrum convergence function of any feature map and the magnitude difference function may be represented as formula 7.1.

$$L_s(G) = L_{sc}(x, y) + L_{mag}(x, y) \qquad \text{formula 7.1}$$

The computer device may further perform normalization based on the weighting expression of the spectrum convergence function of the feature maps and the magnitude difference function to obtain a multi-resolution loss function. The multi-resolution loss function may be represented by $L_{aux}(G)$, and may specifically represented as formula 8.1.

$$L_{aux}(G) = \frac{1}{M}\sum_{m=1}^{M} L_s^{(m)}(G) \qquad \text{formula } 8.1$$

where, m represents a value of the quantity of obtained feature maps at different resolutions, M represents the total quantity of obtained feature maps at different resolutions, m may take the value of 0 to 3, and M is equal to 4. Based on the foregoing loss functions, the loss function used for training the generator is represented as formula 9.1.

$$Loss = Loss_G + Loss_D + L_{aux}(G) \qquad \text{formula } 9.1$$

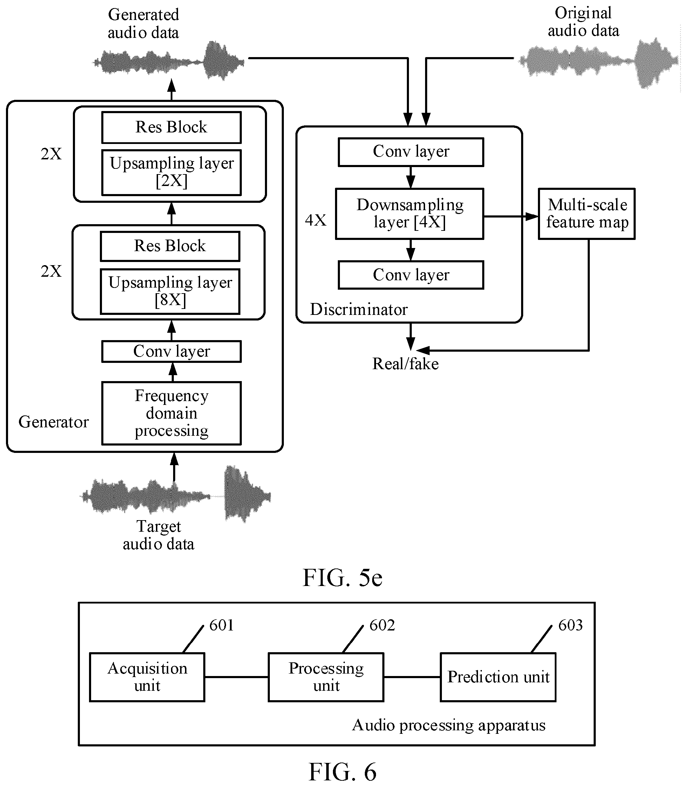

The generator is trained according to a combined loss of the time domain and the frequency domain, so that a trained generator generates high-level semantics and audio data with high audio quality. In all embodiments of the present disclosure, a connection mode of the generator and the discriminator may be as shown in FIG. 5e. Audio data generated by the generator may be the foregoing predicted audio data, or may also be the foregoing compensated audio data, which is not defined herein.

In all embodiments of the present disclosure, in order to enable a computer device to refer to more audio information in target audio data when the computer device predicts and compensates for an audio missing segment in the target audio data, the computer device may predict and compensate for the audio missing segment based on an end-to-end non-autoregressive generator according to all frequency spectrum information of context audio data of the audio missing segment in the target audio data. Moreover, after obtaining predicted audio data, the computer device generates final compensated predicted data based on the predicted audio data and the target audio data, so that the accuracy of prediction executable by the computer device on the audio missing segment is improved, the smooth transition executable by the computer device on the audio missing segment according to the predicted data is also improved, and the listening experience of a user may be improved. In addition, when training the generator, the computer device trains the time domain prediction performance and the frequency domain prediction performance of the generator respectively, so that the robustness of a trained generator may be improved.

Based on the description of the foregoing audio processing method embodiments, the embodiments of the present disclosure further propose an audio processing apparatus, which may be a computer program (including program codes) running on the foregoing computer device. The audio processing apparatus is configured to perform the audio processing method shown in FIG. 2 or FIG. 4. Referring to FIG. 6, the audio processing apparatus includes: an acquisition unit 601, a processing unit 602, and a prediction unit 603. The acquisition unit 601 is configured to acquire target audio and frequency spectrum information of the target audio data, the target audio data having an audio missing segment, and the frequency spectrum information including a frequency spectrum feature of a context audio segment of the audio missing segment. The processing unit 602 is configured to perform feature compensation on the frequency spectrum information of the target audio data according to the frequency spectrum feature of the context audio segment to obtain compensated frequency spectrum information of the target audio data. The prediction unit 603 is configured to perform audio prediction according to the compensated frequency spectrum information to obtain predicted audio data. The processing unit 602 is further configured to compensate for the audio missing segment in the target audio data according to the predicted audio data to obtain compensated audio data of the target audio data.

In all embodiments of the present disclosure, the processing unit 602 may be specifically configured to: perform audio fusion on the target audio data and the predicted audio data based on the audio missing segment to obtain the compensated audio data of the target audio data.

In all embodiments of the present disclosure, the processing unit 602 may be specifically configured to: determine a predicted missing segment corresponding to the audio missing segment from the predicted audio data, and determine a predicted associated segment of the predicted missing segment from the predicted audio data; acquire a fusion parameter, and smooth the predicted associated segment according to the fusion parameter to obtain a smoothed predicted associated segment; and replace, in the predicted audio data, a corresponding audio segment in the predicted audio data with the smoothed predicted associated segment to obtain fused audio data.

In all embodiments of the present disclosure, the processing unit 602 may be specifically configured to: replace the audio missing segment in the target audio data with the predicted missing segment in the predicted audio data, and replace a corresponding audio segment in the target audio data with the smoothed predicted associated segment to obtain the fused audio data.

In all embodiments of the present disclosure, the target audio data may include data extracted by a generator from training audio data, and the generator specifies a sampling rate and an audio extraction length. The acquisition unit 601 is specifically configured to: invoke the generator to extract intermediate audio data with the audio extraction length from the training audio data; and invoke the generator to sample the intermediate audio data according to a target sampling rate to obtain a sampling sequence of the intermediate audio data, and perform simulative packet loss adjustment on multiple sampling points in the sampling sequence according to a preset packet loss length to obtain the target audio data, the sampling points subjected to the simulative packet loss adjustment being the audio missing segment in the target audio data.

In all embodiments of the present disclosure, the target audio data may be determined by the generator according to the intermediate audio data extracted from the training audio data; and the processing unit 602 is further configured to invoke a discriminator to extract feature maps of the compensated audio data at different resolutions. The processing unit 602 is further configured to determine a feature difference between the compensated audio data and the intermediate audio data, from which the target audio data is obtained, according to the feature maps of the compensated audio data at different resolutions, and train the generator and the discriminator based on the feature difference to obtain a trained generator and a trained discriminator.

In all embodiments of the present disclosure, the generator and the discriminator may be trained based on a loss function, and the loss function includes a multi-resolution loss function; and the processing unit 602 is specifically configured to: determine a frequency spectrum feature of the feature map of the compensated audio data at any resolution, and acquire a frequency spectrum feature of the intermediate audio data; obtain a spectrum convergence function of the feature map at any resolution according to the frequency spectrum feature of the feature map at any resolution and the frequency spectrum feature of the intermediate audio data, the spectrum convergence function being used for indicating a frequency spectrum difference between the frequency spectrum feature of the intermediate audio data and the feature map at any resolution; and solve the multi-resolution loss function according to the spectrum convergence functions of the feature maps at different resolutions, and train the generator and the discriminator based on the multi-resolution loss function.

In all embodiments of the present disclosure, the processing unit 602 may be specifically configured to: determine, in a case that the frequency spectrum feature of the intermediate audio data is taken as a reference feature, the spectrum convergence function of the feature map at any resolution according to the frequency spectrum feature of the feature map at any resolution and the frequency spectrum feature of the intermediate audio data. The processing unit 602 is specifically configured to: acquire a frequency spectrum magnitude difference between the frequency spectrum feature of the feature map at any resolution and the frequency spectrum feature of the intermediate audio data to obtain a magnitude difference function; and take a function, obtained by weighting the spectrum convergence functions of the feature maps at different resolutions and the corresponding magnitude difference functions, as the multi-resolution loss function.

In all embodiments of the present disclosure, the generator and the discriminator may be trained based on the loss function, and the loss function further includes a discriminator loss function and a generator loss function. The processing unit 602 is specifically configured to: determine a time domain feature of the compensated audio data according to the feature maps of the compensated audio data at different resolutions, and acquire a time domain feature difference between the compensated audio data and the intermediate audio data from which the target audio data is obtained; acquire a consistency discrimination result of the compensated audio data and the intermediate audio data that is determined by the discriminator based on the time domain feature difference, and solve the discriminator loss function according to the consistency discrimination result; and solve the generator loss function according to the time domain feature difference, and train the generator and the discriminator according to the generator loss function and the discriminator loss function.

In all embodiments of the present disclosure, the frequency spectrum information further may include a frequency spectrum feature of the audio missing segment. The processing unit 602 is specifically configured to: smooth the frequency spectrum feature of the audio missing segment according to the frequency spectrum feature of the context audio segment to obtain a smoothed frequency spectrum feature of the audio missing segment; and perform the feature compensation on the frequency spectrum information of the target audio data according to all frequency spectrum features of the context audio segment and the smoothed frequency spectrum feature of the audio missing segment, to obtain the compensated frequency spectrum information of the target audio data.

In all embodiments of the present disclosure, the processing unit 602 may be specifically configured to: acquire a frequency spectrum length of frequency spectrum information composed of the frequency spectrum features of the context audio segment and the smoothed frequency spectrum feature of the audio missing segment, the frequency spectrum length being used for indicating a quantity of feature points in the frequency spectrum information; determine a quantity of sampling points in a sampling sequence corresponding to the target audio data according to a sampling rate and an audio extraction length at which the target audio data is obtained, and perform upsampling on the frequency spectrum information according to the quantity of sampling points to make the quantity of feature points in the frequency spectrum information be equal to the quantity of sampling points; and take frequency spectrum information obtained after performing the upsampling as the compensated frequency spectrum information of the target audio data.

In all embodiments of the present disclosure, upsampling may be performed once or more times on the frequency spectrum information according to the quantity of sampling points; and the processing unit 602 is further configured to perform, after the upsampling is performed once, multi-scale convolution operation on frequency spectrum information obtained after performing the upsampling, to obtain all frequency spectrum features of the context audio segment.

In all embodiments of the present disclosure, the prediction unit 603 may be specifically configured to: adjust a quantity of frequency spectrum channels of the compensated frequency spectrum information to 1 to obtain the predicted audio data.

In the embodiments of the present disclosure, the acquisition unit 601 may acquire frequency spectrum information of target audio data after acquiring the target audio data with an audio missing segment, and the processing unit 602 may perform feature compensation on the frequency spectrum information based on a frequency spectrum feature of a context audio segment of the audio missing segment that is included in the frequency spectrum information to obtain compensated frequency spectrum information of the target audio data, and recognize the compensated frequency spectrum information to obtain more frequency spectrum information of the target audio data. In addition, after the processing unit 602 obtains the compensated frequency spectrum information, the prediction unit 603 may perform audio prediction according to the compensated frequency spectrum information to obtain predicted audio data, and compensate for the audio missing segment in the target audio data according to the predicted audio data and the target audio data to obtain compensated audio data of the target audio data. The audio missing segment is predicted and compensated according to frequency spectrum information of the overall context audio segment, so that the audio missing segment is predicted and compensated based on all frequency spectrum information of the target audio data, and the accuracy and rationality of prediction and compensation for the audio missing segment may be improved.

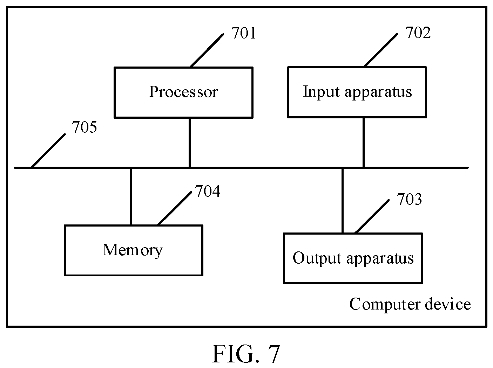

Referring to FIG. 7, FIG. 7 is a schematic structural block diagram of a computer device according to an embodiment of the present disclosure. The computer device may be a terminal device or a server, which is not defined herein. As shown in FIG. 7, the computer device of this embodiment may include: one or more processors 701, one or more input apparatuses 702, one or more output apparatuses 703, and a memory 704. The foregoing processor 701, input apparatus 702, output apparatus 703, and memory 704 are connected via a bus 705. The memory 704 is configured to store a computer program including program instructions, and the processor 701 is configured to execute the program instructions stored in the memory 704.

The memory 704 may include a volatile memory such as a random-access memory (RAM). The memory 704 may also include a non-volatile memory such as a flash memory and a solid-state drive (SSD). The memory 704 may further include a combination of the foregoing types of memories.

The processor 701 may be a central processing unit (CPU). The processor 701 may further include a hardware chip. The foregoing hardware chip may be an application-specific integrated circuit (ASIC), a programmable logic device (PLD), or the like. The PLD may be a field-programmable gate array (FPGA), a generic array logic (GAL), or the like. The processor 701 may also be a combination of the foregoing structures.

In the embodiments of the present disclosure, the memory 704 may be configured to store a computer program including program instructions, and the processor 701 is configured to execute the program instructions stored in the memory 704 to implement the steps of the corresponding method shown in FIG. 2 or FIG. 4.

In all embodiments of the present disclosure, the processor 701 may be configured to invoke the program instructions to perform: acquiring target audio data and frequency spectrum information of the target audio data, the target audio data having an audio missing segment, and the frequency spectrum information including a frequency spectrum feature of a context audio segment of the audio missing segment; performing feature compensation on the frequency spectrum information of the target audio data according to the frequency spectrum feature of the context audio segment to obtain compensated frequency spectrum information of the target audio data; performing audio prediction according to the compensated frequency spectrum information to obtain predicted audio data; and compensating for the audio missing segment in the target audio data according to the predicted audio data to obtain compensated audio data of the target audio data.

The embodiments of the present disclosure provide a computer program product or a computer program, which includes computer instructions. The computer instructions are stored in a computer-readable storage medium. A processor of a computer device reads the computer instructions from the computer-readable storage medium and executes the computer instructions to cause the computer device to perform the foregoing method embodiment shown in FIG. 2 or FIG. 4. The computer-readable storage medium may be a magnetic disk, an optical disc, a read-only memory (ROM), a random access memory (RAM), or the like.

In addition, the embodiments of the present disclosure further provide a storage medium, which is configured to store a computer program. The computer program is used for performing the method according to the foregoing embodiments.

The above are merely some embodiments of the present disclosure, and are not intended to limit the scope of the claims of the present disclosure. Those of ordinary skill in the art may understand and implement all or some processes of the foregoing embodiments, and equivalent modifications made according to the claims of the present disclosure shall still fall within the scope of the present disclosure.

**Claims**

1. An audio processing method, executable by a computer device, **characterized in that**, the method comprises:

   acquiring (S201) target audio data and frequency spectrum information of the target audio data, the target audio data having an audio missing segment, and the frequency spectrum information comprising a frequency spectrum feature of a context audio segment of the audio missing segment;
   performing (S202) feature compensation, by alternately performing upsampling and convolution, on the frequency spectrum information of the target audio data according to the frequency spectrum feature of the context audio segment to obtain compensated frequency spectrum information of the target audio data;
   performing (S203) audio prediction according to the compensated frequency spectrum information to obtain predicted audio data; and
   compensating for (S204) the audio missing segment in the target audio data according to the predicted audio data to obtain compensated audio data of the target audio data.

2. The method according to claim 1, wherein the compensating for the audio missing segment in the target audio data according to the predicted audio data to obtain compensated audio data of the target audio data comprises:
   performing audio fusion on the target audio data and the predicted audio data based on the audio missing segment to obtain the compensated audio data of the target audio data.

3. The method according to claim 2, wherein the performing audio fusion on the target audio data and the predicted audio data based on the audio missing segment to obtain the compensated audio data of the target audio data comprises:

   determining a predicted missing segment corresponding to the audio missing segment from the predicted audio data, and determining a predicted associated segment of the predicted missing segment from the predicted audio data;
   acquiring a fusion parameter, and smoothing the predicted associated segment according to the fusion parameter to obtain a smoothed predicted associated segment; and
   replacing, in the predicted audio data, a corresponding audio segment in the predicted audio data with the smoothed predicted associated segment to obtain fused audio data.

4. The method according to claim 3, after obtaining the smoothed predicted associated segment, further comprising:
   replacing the audio missing segment in the target audio data with the predicted missing segment in the predicted audio data, and replacing a corresponding audio segment in the target audio data with the smoothed predicted associated segment to obtain the fused audio data.

5. The method according to claim 1, wherein the target audio data comprises data extracted by a generator from training audio data, and the generator specifies a sampling rate and an audio extraction length; and the acquiring target audio data comprises:

   invoking the generator to extract intermediate audio data with the audio extraction length from the training audio data; and
   invoking the generator to sample the intermediate audio data according to a target sampling rate to obtain a sampling sequence of the intermediate audio data, and performing simulative packet loss adjustment on a plurality of sampling points in the sampling sequence according to a preset packet loss length to obtain the target audio data, the sampling points subjected to the simulative packet loss adjustment being the audio missing segment in the target audio data.

6. The method according to claim 1, wherein the target audio data is determined by a generator according to intermediate audio data extracted from training audio data; and the method further comprises:

   invoking a discriminator to extract feature maps of the compensated audio data at different resolutions; and
   determining a feature difference between the compensated audio data and the intermediate audio data, from which the target audio data is obtained, according to the feature maps of the compensated audio data at different resolutions, and training the generator and the discriminator based on the feature difference to obtain a trained generator and a trained discriminator.

7. The method according to claim 6, wherein the generator and the discriminator are trained based on a loss function, and the loss function comprises a multi-resolution loss function; and the determining a feature difference between the compensated audio data and the intermediate audio data, from which the target audio data is obtained, according to the feature maps of the compensated audio data at different resolutions and training the generator and the discriminator based on the feature difference comprises:

determining a frequency spectrum feature of the feature map of the compensated audio data at any resolution, and acquiring a frequency spectrum feature of the intermediate audio data;

obtaining a spectrum convergence function of the feature map at any resolution according to the frequency spectrum feature of the feature map at any resolution and the frequency spectrum feature of the intermediate audio data, the spectrum convergence function being used for indicating a frequency spectrum difference between the frequency spectrum feature of the intermediate audio data and the feature map at any resolution; and solving the multi-resolution loss function according to the spectrum convergence functions of the feature maps at different resolutions, and training the generator and the discriminator based on the multi-resolution loss function.

8. The method according to claim 7, wherein the obtaining a spectrum convergence function of the feature map at any resolution according to the frequency spectrum feature of the feature map at any resolution and the frequency spectrum feature of the intermediate audio data comprises:

determining, in a case that the frequency spectrum feature of the intermediate audio data is taken as a reference feature, the spectrum convergence function of the feature map at any resolution according to the frequency spectrum feature of the feature map at any resolution and the frequency spectrum feature of the intermediate audio data; and

the solving the multi-resolution loss function according to the spectrum convergence functions of the feature maps at different resolutions comprises:

acquiring a frequency spectrum magnitude difference between the frequency spectrum feature of the feature map at any resolution and the frequency spectrum feature of the intermediate audio data to obtain a magnitude difference function; and

taking a function, obtained by weighting the spectrum convergence functions of the feature maps at different resolutions and the corresponding magnitude difference functions, as the multi-resolution loss function.

9. The method according to claim 6, wherein the generator and the discriminator are trained based on a loss function, and the loss function further comprises a discriminator loss function and a generator loss function; and the determining a feature difference between the compensated audio data and the intermediate audio data, from which the target audio data is obtained, according to the feature maps of the compensated audio data at different resolutions and training the generator and the discriminator based on the feature difference comprises:

determining a time domain feature of the compensated audio data according to the feature maps of the compensated audio data at different resolutions, and acquiring a time domain feature difference between the compensated audio data and the intermediate audio data from which the target audio data is obtained;

acquiring a consistency discrimination result of the compensated audio data and the intermediate audio data that is determined by the discriminator based on the time domain feature difference, and solving the discriminator loss function according to the consistency discrimination result; and

solving the generator loss function according to the time domain feature difference, and training the generator and the discriminator according to the generator loss function and the discriminator loss function.

10. The method according to claim 1, wherein the frequency spectrum information of the target audio data further comprises a frequency spectrum feature of the audio missing segment; and the performing feature compensation on the frequency spectrum information of the target audio data according to the frequency spectrum feature of the context audio segment to obtain compensated frequency spectrum information of the target audio data comprises:

smoothing the frequency spectrum feature of the audio missing segment according to the frequency spectrum feature of the context audio segment to obtain a smoothed frequency spectrum feature of the audio missing segment; and

performing the feature compensation on the frequency spectrum information of the target audio data according to all frequency spectrum features of the context audio segment and the smoothed frequency spectrum feature of the audio missing segment, to obtain the compensated frequency spectrum information of the target audio data.

11. The method according to claim 10, wherein the performing the feature compensation on the frequency spectrum information of the target audio data according to all frequency spectrum features of the context audio segment and the smoothed frequency spectrum feature of the audio missing segment to obtain the compensated frequency spectrum information of the target audio data comprises:

acquiring a frequency spectrum length of frequency spectrum information composed of the frequency spectrum features of the context audio segment and the smoothed frequency spectrum feature of the audio missing segment, the frequency spectrum length being used for indicating a quantity of feature points in the frequency spectrum information;

determining a quantity of sampling points in a sampling sequence corresponding to the target audio data according to a sampling rate and an audio extraction length at which the target audio data is obtained, and performing upsampling on the frequency spectrum information according to the quantity of sampling points to make the quantity of feature points in the frequency spectrum information be equal to the quantity of sampling points; and

taking frequency spectrum information obtained after performing the upsampling as the compensated frequency spectrum information of the target audio data.

12. The method according to claim 11, wherein the upsampling is performed once or more times on the frequency spectrum information according to the quantity of sampling points; and the method further comprises: after the upsampling is performed once, performing multi-scale convolution operation on frequency spectrum information obtained after performing the upsampling to obtain all frequency spectrum features of the context audio segment.

13. The method according to claim 1, wherein the performing audio prediction according to the compensated frequency spectrum information to obtain predicted audio data comprises: adjusting a quantity of frequency spectrum channels of the compensated frequency spectrum information to 1 to obtain the predicted audio data.

14. A computer device, **characterized in that**, the computer device comprises a processor, an input apparatus, an output apparatus, and a memory, the processor, the input apparatus, the output apparatus, and the memory being connected to each other, the memory being configured to store a computer program, the computer program comprising program instructions, and the processor being configured to invoke the program instructions to perform the method according to any one of claims 1 to 13.

15. A computer-readable storage medium, **characterized in that**, the computer-readable storage medium stores a computer program, the computer program comprising program instructions that, when executed by a processor, cause the processor to perform the method according to any one of claims 1 to 13.


**Patentansprüche**

1. Audioverarbeitungsverfahren, das durch eine Computervorrichtung ausführbar ist, **dadurch gekennzeichnet, dass** das Verfahren umfasst:

Erfassen (S201) von Zielaudiodaten und Frequenzspektruminformation der Zielaudiodaten, wobei die Zielaudiodaten ein Segment mit fehlendem Audio aufweisen, und die Frequenzspektruminformation ein Frequenzspektrummerkmal eines Kontextaudiosegments des Segments mit fehlendem Audio umfasst;
Durchführen (S202) von Merkmalskompensation, durch abwechselndes Durchführen von Upsampling und Faltung, an der Frequenzspektruminformation der Zielaudiodaten gemäß dem Frequenzspektrummerkmal des Kontextaudiosegments, um kompensierte Frequenzspektruminformation der Zielaudiodaten zu erhalten;
Durchführen (S203) von Audiovorhersage gemäß der kompensierten Frequenzspektruminformation, um vorhergesagte Audiodaten zu erhalten; und
Kompensieren (S204) des Segments mit fehlendem Audio in den Zielaudiodaten gemäß den vorhergesagten Audiodaten, um kompensierte Audiodaten der Zielaudiodaten zu erhalten.

2. Verfahren nach Anspruch 1, wobei das Kompensieren des Segments mit fehlendem Audio in den Zielaudiodaten gemäß den vorhergesagten Audiodaten, um kompensierte Audiodaten der Zielaudiodaten zu erhalten, umfasst:
Durchführen von Audiofusion an den Zielaudiodaten und den vorhergesagten Audiodaten basierend auf dem Segment mit fehlendem Audio, um die kompensierten Audiodaten der Zielaudiodaten zu erhalten.

3. Verfahren nach Anspruch 2, wobei das Durchführen von Audiofusion an den Zielaudiodaten und den vorhergesagten Audiodaten basierend auf dem Segment mit fehlendem Audio, um die kompensierten Audiodaten der Zielaudiodaten zu erhalten, umfasst:

Bestimmen eines vorhergesagten fehlenden Segments, das dem Segment mit fehlendem Audio entspricht, aus den vorhergesagten Audiodaten, und Bestimmen eines vorhergesagten zugehörigen Segments des vorhergesagten fehlenden Segments aus den vorhergesagten Audiodaten;
Erfassen eines Fusionsparameters, und Glätten des vorhergesagten zugehörigen Segments gemäß dem Fusionsparameter, um ein geglättetes vorhergesagtes zugehöriges Segment zu erhalten; und
Ersetzen, in den vorhergesagten Audiodaten, eines entsprechenden Audiosegments in den vorhergesagten Audiodaten durch das geglättete vorhergesagte zugehörige Segment, um fusionierte Audiodaten zu erhalten.

4. Verfahren nach Anspruch 3, nach dem Erhalten des geglätteten vorhergesagten zugehörigen Segments, ferner umfassend:
Ersetzen des Segments mit fehlendem Audio in den Zielaudiodaten durch das vorhergesagte fehlende Segment in den vorhergesagten Audiodaten, und Ersetzen eines entsprechenden Audiosegments in den Zielaudiodaten durch das geglättete vorhergesagte zugehörige Segment, um die fusionierten Audiodaten zu erhalten.

5. Verfahren nach Anspruch 1, wobei die Zielaudiodaten Daten umfassen, die durch einen Generator aus Trainingsaudiodaten extrahiert werden, und der Generator eine Abtastrate und eine Audioextraktionslänge spezifiziert; und das Erfassen von Zielaudiodaten umfasst:

Aufrufen des Generators, um Zwischenaudiodaten mit der Audioextraktionslänge aus den Trainingsaudiodaten zu extrahieren; und
Aufrufen des Generators, um die Zwischenaudiodaten gemäß einer Zielabtastrate abzutasten, um eine Abtastsequenz der Zwischenaudiodaten zu erhalten, und Durchführen von simulativer Paketverlustanpassung an einer Vielzahl von Abtastpunkten in der Abtastsequenz gemäß einer voreingestellten Paketverlustlänge, um die Zielaudiodaten zu erhalten, wobei die Abtastpunkte, die der simulativen Paketverlustanpassung unterzogen werden, das Segment mit fehlendem Audio in den Zielaudiodaten sind.

6. Verfahren nach Anspruch 1, wobei die Zielaudiodaten durch einen Generator gemäß Zwischenaudiodaten bestimmt werden, die aus Trainingsaudiodaten extrahiert werden; und das Verfahren ferner umfasst:

Aufrufen eines Diskriminators, um Merkmalskarten der kompensierten Audiodaten bei unterschiedlichen Auflösungen zu extrahieren; und
Bestimmen eines Merkmalsunterschieds zwischen den kompensierten Audiodaten und den Zwischenaudiodaten, aus denen die Zielaudiodaten erhalten werden, gemäß den Merkmalskarten der kompensierten Audiodaten bei unterschiedlichen Auflösungen, und Trainieren des Generators und des Diskriminators basierend auf dem Merkmalsunterschied, um einen trainierten Generator und einen trainierten Diskriminator zu erhalten.

7. Verfahren nach Anspruch 6, wobei der Generator und der Diskriminator basierend auf einer Verlustfunktion trainiert werden, und die Verlustfunktion eine Mehrauflösungs-Verlustfunktion umfasst; und das Bestimmen eines Merkmalsunterschieds zwischen den kompensierten Audiodaten und den Zwischenaudiodaten, aus denen die Zielaudiodaten erhalten werden, gemäß den Merkmalskarten der kompensierten Audiodaten bei unterschiedlichen Auflösungen und Trainieren des Generators und des Diskriminators basierend auf dem Merkmalsunterschied umfasst:

Bestimmen eines Frequenzspektrummerkmals der Merkmalskarte der kompensierten Audiodaten bei einer beliebigen Auflösung, und Erfassen eines Frequenzspektrummerkmals der Zwischenaudiodaten;
Erhalten einer Spektrumkonvergenzfunktion der Merkmalskarte bei einer beliebigen Auflösung gemäß dem Frequenzspektrummerkmal der Merkmalskarte bei einer beliebigen Auflösung und dem Frequenzspektrummerkmal der Zwischenaudiodaten, wobei die Spektrumkonvergenzfunktion zum Anzeigen eines Frequenzspektrumunterschieds zwischen dem Frequenzspektrummerkmal der Zwischenaudiodaten und der Merkmalskarte bei einer beliebigen Auflösung verwendet wird; und
Lösen der Mehrauflösungs-Verlustfunktion gemäß den Spektrumkonvergenzfunktionen der Merkmalskarten bei unterschiedlichen Auflösungen, und Trainieren des Generators und des Diskriminators basierend auf der Mehrauflösungs-Verlustfunktion.

8. Verfahren nach Anspruch 7, wobei das Erhalten einer Spektrumkonvergenzfunktion der Merkmalskarte bei einer beliebigen Auflösung gemäß dem Frequenzspektrummerkmal der Merkmalskarte bei einer beliebigen Auflösung und dem Frequenzspektrummerkmal der Zwischenaudiodaten umfasst:

Bestimmen, in einem Fall, dass das Frequenzspektrummerkmal der Zwischenaudiodaten als ein Referenzmerkmal genommen wird, der Spektrumkonvergenzfunktion der Merkmalskarte bei einer beliebigen Auflösung gemäß dem Frequenzspektrummerkmal der Merkmalskarte bei einer beliebigen Auflösung und dem Frequenzspektrummerkmal der Zwischenaudiodaten; und
das Lösen der Mehrauflösungs-Verlustfunktion gemäß den Spektrumkonvergenzfunktionen der Merkmalskarten bei unterschiedlichen Auflösungen umfasst:

Erfassen eines Frequenzspektrumbetragsunterschieds zwischen dem Frequenzspektrummerkmal der Merkmalskarte bei einer beliebigen Auflösung und dem Frequenzspektrummerkmal der Zwischenaudiodaten, um eine Betragsdifferenzfunktion zu erhalten; und
Nehmen einer Funktion, die durch Gewichten der Spektrumkonvergenzfunktionen der Merkmalskarten bei unterschiedlichen Auflösungen und der entsprechenden Betragsdifferenzfunktionen erhalten wird, als die Mehrauflösungs-Verlustfunktion.

9. Verfahren nach Anspruch 6, wobei der Generator und der Diskriminator basierend auf einer Verlustfunktion trainiert werden, und die Verlustfunktion ferner eine Diskriminator-Verlustfunktion und eine Generator-Verlustfunktion umfasst; und das Bestimmen eines Merkmalsunterschieds zwischen den kompensierten Audiodaten und den Zwischenaudiodaten, aus denen die Zielaudiodaten erhalten werden, gemäß den Merkmalskarten der kompensierten Audiodaten bei unterschiedlichen Auflösungen und Trainieren des Generators und des Diskriminators basierend auf dem Merkmalsunterschied umfasst:

Bestimmen eines Zeitbereichsmerkmals der kompensierten Audiodaten gemäß den Merkmalskarten der kompensierten Audiodaten bei unterschiedlichen Auflösungen, und Erfassen eines Zeitbereichsmerkmalsunterschieds zwischen den kompensierten Audiodaten und den Zwischenaudiodaten, aus denen die Zielaudiodaten erhalten werden;
Erfassen eines Konsistenzunterscheidungsergebnisses der kompensierten Audiodaten und der Zwischenaudiodaten, das durch den Diskriminator basierend auf dem Zeitbereichsmerkmalsunterschied bestimmt wird, und Lösen der Diskriminator-Verlustfunktion gemäß dem Konsistenzunterscheidungsergebnis; und
Lösen der Generator-Verlustfunktion gemäß dem Zeitbereichsmerkmalsunterschied, und Trainieren des Generators und des Diskriminators gemäß der Generator-Verlustfunktion und der Diskriminator-Verlustfunktion.

10. Verfahren nach Anspruch 1, wobei die Frequenzspektruminformation der Zielaudiodaten ferner ein Frequenzspektrummerkmal des Segments mit fehlendem Audio umfasst; und das Durchführen von Merkmalskompensation an der Frequenzspektruminformation der Zielaudiodaten gemäß dem Frequenzspektrummerkmal des Kontextaudiosegments, um kompensierte Frequenzspektruminformation der Zielaudiodaten zu erhalten, umfasst:

Glätten des Frequenzspektrummerkmals des Segments mit fehlendem Audio gemäß dem Frequenzspektrummerkmal des Kontextaudiosegments, um ein geglättetes Frequenzspektrummerkmal des Segments mit fehlendem Audio zu erhalten; und
Durchführen der Merkmalskompensation an der Frequenzspektruminformation der Zielaudiodaten gemäß allen Frequenzspektrummerkmalen des Kontextaudiosegments und dem geglätteten Frequenzspektrummerkmal des Segments mit fehlendem Audio, um die kompensierte Frequenzspektruminformation der Zielaudiodaten zu erhalten.

11. Verfahren nach Anspruch 10, wobei das Durchführen der Merkmalskompensation an der Frequenzspektruminformation der Zielaudiodaten gemäß allen Frequenzspektrummerkmalen des Kontextaudiosegments und dem geglätteten Frequenzspektrummerkmal des Segments mit fehlendem Audio, um die kompensierte Frequenzspektruminformation der Zielaudiodaten zu erhalten, umfasst:

Erfassen einer Frequenzspektrumlänge von Frequenzspektruminformation, die aus den Frequenzspektrummerkmalen des Kontextaudiosegments und dem geglätteten Frequenzspektrummerkmal des Segments mit fehlendem Audio zusammengesetzt ist, wobei die Frequenzspektrumlänge zum Anzeigen einer Anzahl von Merkmalspunkten in der Frequenzspektruminformation verwendet wird;

Bestimmen einer Anzahl von Abtastpunkten in einer Abtastsequenz, die den Zielaudiodaten entspricht, gemäß einer Abtastrate und einer Audioextraktionslänge, bei denen die Zielaudiodaten erhalten werden, und Durchführen von Upsampling an der Frequenzspektruminformation gemäß der Anzahl von Abtastpunkten, um die Anzahl von Merkmalspunkten in der Frequenzspektruminformation gleich der Anzahl von Abtastpunkten zu machen; und

Nehmen von Frequenzspektruminformation, die nach dem Durchführen des Upsamplings erhalten wird, als die kompensierte Frequenzspektruminformation der Zielaudiodaten.

12. Verfahren nach Anspruch 11, wobei das Upsampling einmal oder mehrmals an der Frequenzspektruminformation gemäß der Anzahl von Abtastpunkten durchgeführt wird; und das Verfahren ferner umfasst:

nachdem das Upsampling einmal durchgeführt wird, Durchführen einer Mehrskalen-Faltungsoperation an Frequenzspektruminformation, die nach dem Durchführen des Upsamplings erhalten wird, um alle Frequenzspektrummerkmale des Kontextaudiosegments zu erhalten.

13. Verfahren nach Anspruch 1, wobei das Durchführen von Audiovorhersage gemäß der kompensierten Frequenzspektruminformation, um vorhergesagte Audiodaten zu erhalten, umfasst:

Anpassen einer Anzahl von Frequenzspektrumkanälen der kompensierten Frequenzspektruminformation auf 1, um die vorhergesagten Audiodaten zu erhalten.

14. Computervorrichtung, **dadurch gekennzeichnet, dass** die Computervorrichtung einen Prozessor, eine Eingabevorrichtung, eine Ausgabevorrichtung und einen Speicher umfasst, wobei der Prozessor, die Eingabevorrichtung, die Ausgabevorrichtung und der Speicher miteinander verbunden sind, wobei der Speicher konfiguriert ist, ein Computerprogramm zu speichern, wobei das Computerprogramm Programmanweisungen umfasst, und wobei der Prozessor konfiguriert ist, die Programmanweisungen aufzurufen, um das Verfahren nach einem der Ansprüche 1 bis 13 durchzuführen.

15. Computerlesbares Speichermedium, **dadurch gekennzeichnet, dass** das computerlesbare Speichermedium ein Computerprogramm speichert, wobei das Computerprogramm Programmanweisungen umfasst, die, wenn sie durch einen Prozessor ausgeführt werden, den Prozessor veranlassen, das Verfahren nach einem der Ansprüche 1 bis 13 durchzuführen.

**Revendications**

1. Procédé de traitement audio, exécutable par un dispositif informatique, **caractérisé en ce que** le procédé comprend :

l'acquisition (S201) de données audio cibles et d'informations de spectre de fréquence des données audio cibles, les données audio cibles ayant un segment de manque audio, et les informations de spectre de fréquence comprenant une caractéristique de spectre de fréquence d'un segment audio de contexte du segment de manque audio ;

la réalisation (S202) d'une compensation de caractéristiques, en effectuant alternativement un suréchantillonnage et une convolution, sur les informations de spectre de fréquence des données audio cibles selon la caractéristique de spectre de fréquence du segment audio de contexte pour obtenir des informations de spectre de fréquence compensées des données audio cibles ;

la réalisation (S203) d'une prédiction audio selon les informations de spectre de fréquence compensées pour obtenir des données audio prédites ; et

la compensation (S204) du segment de manque audio dans les données audio cibles selon les données audio prédites pour obtenir des données audio compensées des données audio cibles.

2. Procédé selon la revendication 1, dans lequel la compensation du segment de manque audio dans les données audio cibles selon les données audio prédites pour obtenir des données audio compensées des données audio cibles comprend : la réalisation d'une fusion audio sur les données audio cibles et les données audio prédites sur la base du segment de manque audio pour obtenir les données audio compensées des données audio cibles.

3. Procédé selon la revendication 2, dans lequel la réalisation d'une fusion audio sur les données audio cibles et les données audio prédites sur la base du segment de manque audio pour obtenir les données audio compensées des données audio cibles comprend :

la détermination d'un segment manquant prédit correspondant au segment de manque audio à partir des données audio prédites, et la détermination d'un segment associé prédit du segment manquant prédit à partir des données audio prédites ; l'acquisition d'un paramètre de fusion, et le lissage du segment associé prédit selon le paramètre de fusion pour obtenir un segment associé prédit lissé ; et

le remplacement, dans les données audio prédites, d'un segment audio correspondant dans les données audio prédites par le segment associé prédit lissé pour obtenir des données audio fusionnées.

4. Procédé selon la revendication 3, après l'obtention du segment associé prédit lissé, comprenant en outre :
le remplacement du segment de manque audio dans les données audio cibles par le segment manquant prédit dans les données audio prédites, et le remplacement d'un segment audio correspondant dans les données audio cibles par le segment associé prédit lissé pour obtenir les données audio fusionnées.

5. Procédé selon la revendication 1, dans lequel les données audio cibles comprennent des données extraites par un générateur à partir de données audio d'entraînement, et le générateur spécifie un taux d'échantillonnage et une longueur d'extraction audio ; et l'acquisition de données audio cibles comprend :

l'invocation du générateur pour extraire des données audio intermédiaires avec la longueur d'extraction audio à partir des données audio d'entraînement ; et

l'invocation du générateur pour échantillonner les données audio intermédiaires selon un taux d'échantillonnage cible pour obtenir une séquence d'échantillonnage des données audio intermédiaires, et la réalisation d'un ajustement simulé de perte de paquets sur une pluralité de points d'échantillonnage dans la séquence d'échantillonnage selon une longueur de perte de paquets prédéfinie pour obtenir les données audio cibles, les points d'échantillonnage soumis à l'ajustement simulé de perte de paquets étant le segment de manque audio dans les données audio cibles.

6. Procédé selon la revendication 1, dans lequel les données audio cibles sont déterminées par un générateur selon des données audio intermédiaires extraites de données audio d'entraînement ; et le procédé comprend en outre :

l'invocation d'un discriminateur pour extraire des cartes de caractéristiques des données audio compensées à différentes résolutions ; et

la détermination d'une différence de caractéristiques entre les données audio compensées et les données audio intermédiaires, à partir desquelles les données audio cibles sont obtenues, selon les cartes de caractéristiques des données audio compensées à différentes résolutions, et l'entraînement du générateur et du discriminateur sur la base de la différence de caractéristiques pour obtenir un générateur entraîné et un discriminateur entraîné.

7. Procédé selon la revendication 6, dans lequel le générateur et le discriminateur sont entraînés sur la base d'une fonction de perte, et la fonction de perte comprend une fonction de perte multi-résolution ; et la détermination d'une différence de caractéristiques entre les données audio compensées et les données audio intermédiaires, à partir desquelles les données audio cibles sont obtenues, selon les cartes de caractéristiques des données audio compensées à différentes résolutions et l'entraînement du générateur et du discriminateur sur la base de la différence de caractéristiques comprend :

la détermination d'une caractéristique de spectre de fréquence de la carte de caractéristiques des données audio compensées à une résolution quelconque, et l'acquisition d'une caractéristique de spectre de fréquence des données audio intermédiaires ;

l'obtention d'une fonction de convergence de spectre de la carte de caractéristiques à une résolution quelconque selon la caractéristique de spectre de fréquence de la carte de caractéristiques à une résolution quelconque et la caractéristique de spectre de fréquence des données audio intermédiaires, la fonction de convergence de spectre étant utilisée pour indiquer une différence de spectre de fréquence entre la caractéristique de spectre de fréquence des données audio intermédiaires et la carte de caractéristiques à une résolution quelconque ; et

la résolution de la fonction de perte multi-résolution selon les fonctions de convergence de spectre des cartes de caractéristiques à différentes résolutions, et l'entraînement du générateur et du discriminateur sur la base de la fonction de perte multi-résolution.

8. Procédé selon la revendication 7, dans lequel l'obtention d'une fonction de convergence de spectre de la carte de caractéristiques à une résolution quelconque selon la caractéristique de spectre de fréquence de la carte de caractéristiques à une résolution quelconque et la caractéristique de spectre de fréquence des données audio intermédiaires comprend :

la détermination, dans le cas où la caractéristique de spectre de fréquence des données audio intermédiaires est prise comme caractéristique de référence, de la fonction de convergence de spectre de la carte de caractéristiques à une résolution quelconque selon la caractéristique de spectre de fréquence de la carte de caractéristiques à une résolution quelconque et la caractéristique de spectre de fréquence des données audio intermédiaires ; et
la résolution de la fonction de perte multi-résolution selon les fonctions de convergence de spectre des cartes de caractéristiques à différentes résolutions comprend :

l'acquisition d'une différence de magnitude de spectre de fréquence entre la caractéristique de spectre de fréquence de la carte de caractéristiques à une résolution quelconque et la caractéristique de spectre de fréquence des données audio intermédiaires pour obtenir une fonction de différence de magnitude ; et
la prise d'une fonction, obtenue par pondération des fonctions de convergence de spectre des cartes de caractéristiques à différentes résolutions et des fonctions de différence de magnitude correspondantes, comme la fonction de perte multi-résolution.

9. Procédé selon la revendication 6, dans lequel le générateur et le discriminateur sont entraînés sur la base d'une fonction de perte, et la fonction de perte comprend en outre une fonction de perte du discriminateur et une fonction de perte du générateur ; et la détermination d'une différence de caractéristiques entre les données audio compensées et les données audio intermédiaires, à partir desquelles les données audio cibles sont obtenues, selon les cartes de caractéristiques des données audio compensées à différentes résolutions et l'entraînement du générateur et du discriminateur sur la base de la différence de caractéristiques comprend :

la détermination d'une caractéristique de domaine temporel des données audio compensées selon les cartes de caractéristiques des données audio compensées à différentes résolutions, et l'acquisition d'une différence de caractéristiques de domaine temporel entre les données audio compensées et les données audio intermédiaires à partir desquelles les données audio cibles sont obtenues ;
l'acquisition d'un résultat de discrimination de cohérence des données audio compensées et des données audio intermédiaires qui est déterminé par le discriminateur sur la base de la différence de caractéristiques de domaine temporel, et la résolution de la fonction de perte du discriminateur selon le résultat de discrimination de cohérence ; et
la résolution de la fonction de perte du générateur selon la différence de caractéristiques de domaine temporel, et l'entraînement du générateur et du discriminateur selon la fonction de perte du générateur et la fonction de perte du discriminateur.

10. Procédé selon la revendication 1, dans lequel les informations de spectre de fréquence des données audio cibles comprennent en outre une caractéristique de spectre de fréquence du segment de manque audio ; et la réalisation d'une compensation de caractéristiques sur les informations de spectre de fréquence des données audio cibles selon la caractéristique de spectre de fréquence du segment audio de contexte pour obtenir des informations de spectre de fréquence compensées des données audio cibles comprend :

le lissage de la caractéristique de spectre de fréquence du segment de manque audio selon la caractéristique de spectre de fréquence du segment audio de contexte pour obtenir une caractéristique de spectre de fréquence lissée du segment de manque audio ; et
la réalisation de la compensation de caractéristiques sur les informations de spectre de fréquence des données audio cibles selon toutes les caractéristiques de spectre de fréquence du segment audio de contexte et la caractéristique de spectre de fréquence lissée du segment de manque audio, pour obtenir les informations de spectre de fréquence compensées des données audio cibles.

11. Procédé selon la revendication 10, dans lequel la réalisation de la compensation de caractéristiques sur les informations de spectre de fréquence des données audio cibles selon toutes les caractéristiques de spectre de fréquence du segment audio de contexte et la caractéristique de spectre de fréquence lissée du segment de manque audio pour obtenir les informations de spectre de fréquence compensées des données audio cibles comprend :

l'acquisition d'une longueur de spectre de fréquence d'informations de spectre de fréquence composées des caractéristiques de spectre de fréquence du segment audio de contexte et de la caractéristique de spectre de fréquence lissée du segment de manque audio, la longueur de spectre de fréquence étant utilisée pour indiquer une quantité de points de caractéristique dans les informations de spectre de fréquence ;
la détermination d'une quantité de points d'échantillonnage dans une séquence d'échantillonnage correspon-

EP 4 319 099 B1

dant aux données audio cibles selon un taux d'échantillonnage et une longueur d'extraction audio auxquels les données audio cibles sont obtenues, et la réalisation d'un suréchantillonnage sur les informations de spectre de fréquence selon la quantité de points d'échantillonnage pour rendre la quantité de points de caractéristique dans les informations de spectre de fréquence égale à la quantité de points d'échantillonnage ; et

la prise des informations de spectre de fréquence obtenues après la réalisation du suréchantillonnage comme les informations de spectre de fréquence compensées des données audio cibles.

12. Procédé selon la revendication 11, dans lequel le suréchantillonnage est réalisé une ou plusieurs fois sur les informations de spectre de fréquence selon la quantité de points d'échantillonnage ; et le procédé comprend en outre : après que le suréchantillonnage est réalisé une fois, la réalisation d'une opération de convolution multi-échelle sur les informations de spectre de fréquence obtenues après la réalisation du suréchantillonnage pour obtenir toutes les caractéristiques de spectre de fréquence du segment audio de contexte.

13. Procédé selon la revendication 1, dans lequel la réalisation d'une prédiction audio selon les informations de spectre de fréquence compensées pour obtenir des données audio prédites comprend :

l'ajustement d'une quantité de canaux de spectre de fréquence des informations de spectre de fréquence compensées à 1 pour obtenir les données audio prédites.

14. Dispositif informatique, **caractérisé en ce que** le dispositif informatique comprend un processeur, un appareil d'entrée, un appareil de sortie et une mémoire, le processeur, l'appareil d'entrée, l'appareil de sortie et la mémoire étant connectés les uns aux autres, la mémoire étant configurée pour stocker un programme informatique, le programme informatique comprenant des instructions de programme, et le processeur étant configuré pour invoquer les instructions de programme pour exécuter le procédé selon l'une quelconque des revendications 1 à 13.

15. Support de stockage lisible par ordinateur, **caractérisé en ce que** le support de stockage lisible par ordinateur stocke un programme informatique, le programme informatique comprenant des instructions de programme qui, lorsqu'elles sont exécutées par un processeur, amènent le processeur à exécuter le procédé selon l'une quelconque des revendications 1 à 13.

FIG. 1a

FIG. 1b

Acquire target audio data to be processed and frequency spectrum information of the target audio data — S201

Perform feature compensation on the frequency spectrum information of the target audio data according to a frequency spectrum feature of a context audio segment to obtain compensated frequency spectrum information of the target audio data — S202

Perform audio prediction according to the compensated frequency spectrum information to obtain predicted audio data — S203

Compensate for an audio missing segment in the target audio data according to the predicted audio data to obtain compensated audio data of the target audio data — S204

FIG. 2

FIG. 3a

FIG. 3b

Acquire target audio data to be processed and frequency spectrum information of the target audio data, the target audio data having an audio missing segment, and the frequency spectrum information including a frequency spectrum feature of a context audio segment of the audio missing segment, and a frequency spectrum feature of the audio missing segment

S401

Smooth the frequency spectrum feature of the audio missing segment according to the frequency spectrum feature of the context audio segment to obtain a smoothed frequency spectrum feature

S402

Perform feature compensation on the frequency spectrum information according to all frequency spectrum features of the context audio segment and the smoothed frequency spectrum feature to obtain compensated frequency spectrum information of the target audio data

S403

Perform audio prediction according to the compensated frequency spectrum information to obtain predicted audio data

S404

Compensate for the audio missing segment in the target audio data according to the predicted audio data to obtain compensated audio data of the target audio data

S405

FIG. 4

FIG. 5a

FIG. 5b

FIG. 5c

FIG. 5d

Generated
audio data

Original
audio data

FIG. 5e

FIG. 6

FIG. 7

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202111176990

**Non-patent literature cited in the description**

- **MARAFIOTY et al.** A Context Encoder for Audio Inpainting. *ARXIV:1806.04885V2*, 01 December 2019

- **LEE SUN-KYUNG**. Deep Generative Music Inpainting with Mel-Spectrogram. *KAIST*, 01 January 2020